(19) **Europäisches Patentamt / European Patent Office / Office européen des brevets**

(11) **EP 1 862 670 B1**

(12) **EUROPEAN PATENT SPECIFICATION**

(45) Date of publication and mention
of the grant of the patent:
**17.11.2010 Bulletin 2010/46**

(51) Int Cl.:
***F02P 5/15*** (2006.01)

(21) Application number: **07010290.0**

(22) Date of filing: **23.05.2007**

(54) **Ignition timing control apparatus and method for internal combustion engine**

Zündzeitpunktsteuervorrichtung und Verfahren zur Steuerung eines Verbrennungsmotors

Appareil de commande du temps d'ignition et procédé pour moteur à combustion interne

(84) Designated Contracting States:
**DE GB**

(30) Priority: **02.06.2006 JP 2006154798**

(43) Date of publication of application:
**05.12.2007 Bulletin 2007/49**

(73) Proprietor: **HONDA MOTOR CO., LTD.**
**Tokyo 107-8556 (JP)**

(72) Inventors:
• **Akazaki, Shusuke**
**Wako-shi**
**Saitama 351-0193 (JP)**
• **Hashizume, Mitsuo**
**Wako-shi**
**Saitama 351-0193 (JP)**

• **Mizuno, Takahide**
**Wako-shi**
**Saitama 351-0193 (JP)**
• **Yamamoto, Yuji**
**Wako-shi**
**Saitama 351-0193 (JP)**

(74) Representative: **Trossin, Hans-Jürgen et al**
**Weickmann & Weickmann**
**Patentanwälte**
**Richard-Strauss-Strasse 80**
**81679 München (DE)**

(56) References cited:
**WO-A-02/14822     DE-A1- 3 704 838**
**US-A- 4 483 295     US-A- 4 760 828**

**Description**

BACKGROUND OF THE INVENTION

Field of the Invention:

The present invention relates to an ignition timing control apparatus and method for an internal combustion for controlling an ignition timing in accordance with a knocking occurrence situation.

Description of the Prior Art:

Conventionally, as this type of ignition timing control apparatus, one described, for example, in Laid-open Japanese Patent Application No. 62-150056 is known. This internal combustion engine is a six-cylinder type one having a first to a sixth cylinder, and the ignition timing control apparatus comprises a knock sensor for detecting a knock vibration level on a cylinder-by-cylinder basis, a controller to which the knock sensor is connected, and the like.

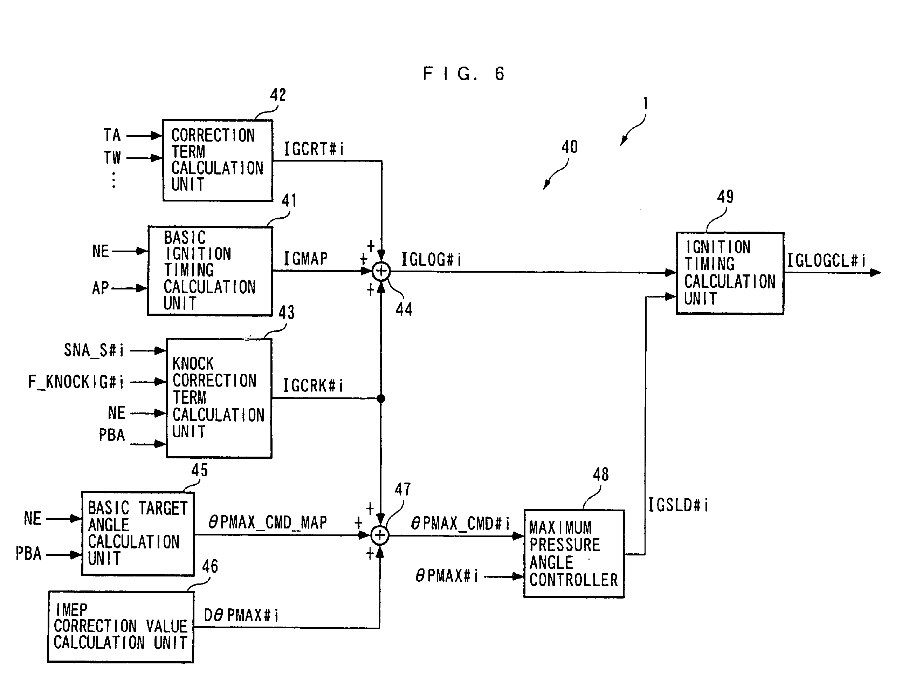

In this controller, an ignition timing is controlled on a cylinder-by-cylinder basis, as described below. First, the controller determines a cylinder for which an ignition timing should be controlled (steps P7, P8 in Fig. 6), reads a knock vibration level K1 of the first cylinder (step P9) when determining the first cylinder, for example, sets a correction value U1 for the first cylinder ignition timing on a retarding side by a predetermined value r (step P16) when the knock vibration level K1 is equal to or higher than a slice level SL, adds the correction value U1 to a basic ignition timing B, and sets the resulting value to a first cylinder ignition timing A1 (step P18). In this way, the first cylinder ignition timing A1 is corrected toward the retarding side by the predetermined value r to restrain knocking in the first cylinder.

According to the conventional ignition timing control apparatus for an internal combustion engine described above, the knock vibration level is determined on a cylinder-by-cylinder basis to set a retard correction amount of the ignition timing on a cylinder-by-cylinder basis to restrain knocking on a cylinder-by-cylinder basis, so that when a fuel presents bad properties, having a low octane number, or the like, for example, a long time is taken to terminate the restraint of knocking in all cylinders, failing to effectively restrain the knocking as the entire internal combustion engine to possibly result in a damage on the internal combustion engine.

US-A-4,483,295 discloses an ignition timing control apparatus that exhibits an knocking detector which detects the occurrence of knocking in an internal combustion engine based on a vibration sensor that detects engine vibrations. The ignition timing control apparatus is further adapted to determine a level of knocking by the output signal of the vibration sensor after the latter being filtered by a bandpass filter on a cylinder-by-cylinder basis, and is further adapted to correct the ignition timing either for only those cylinders actually affected by knocking, if the intensity of knocking is lower than a predetermined value, or for all cylinders collectively, if the intensity of knocking is higher than the predetermined value. The ignition timing is usually retarded for eliminating the occurrence of knocking. As a knocking intensity parameter, the magnitude of the vibrations detected by the vibration sensor is used.

In US-A-4,760,828, the frequency of knocking is compared with a predetermined value for deciding whether the engine is in a continuous knocking state.

WO 02/14822 A shows knocking sensors 1 a, 1 b... 1 n for the respective cylinders, a cylinder discrimination sensor 40, and an engine rotational speed sensor 50.

DE 37 04 838 A1 shows knocking sensors 12, a cylinder discrimination and engine speed sensor 32 and an intake negative pressure (PBA) sensor. A maximum pressure angle is detected as the crank angle position at which the cylinder inner pressure is at a maximum value in a combustion cycle. Knocking is detecting whether a pulse count is above or below a predetermined pulse count threshold. This threshold value of the pulse count is set so that a pulse count below this threshold value indicates a regular combustion while a pulse count above this threshold value indicates the occurrence of knocking with a high degree of probability.

SUMMARY OF THE INVENTION

The present invention has been made to solve the problems as mentioned above, and it is an object of the invention to provide an ignition timing control apparatus and method for an internal combustion engine which are capable of more rapidly and effectively restraining knocking as the entire internal combustion engine, and capable of extending the lifetime of the internal combustion engine.

To achieve the above object, according to a first aspect of the present invention, there is provided an ignition timing control apparatus for an internal combustion engine in accordance with claim 1.
The ignition timing control apparatus comprises ignition timing determining means for determining ignition timings for a plurality of cylinders of the internal combustion engine on a cylinder-by-cylinder basis; knock intensity parameter detecting means for detecting a knock intensity parameter indicative of the intensity of knocking on a cylinder-by-cylinder basis;

correction degree parameter calculating means for calculating a correction degree parameter indicative of a degree to which the ignition timing should be corrected toward a retarding side in accordance with the detected knock intensity parameter on a cylinder-by-cylinder basis; and first correcting means for correcting the ignition timing toward the retarding side on a cylinder-by-cylinder basis in accordance with the calculated correction degree parameter calculating means, wherein the correction degree parameter calculating means calculates the correction degree parameter only for one cylinder corresponding to one of the knock intensity parameters when the one knock intensity parameter is larger than a first determination value and is smaller than a second determination value larger than the first determination value, and calculates the correction degree parameters for all the cylinders when the one knock intensity parameter is equal to or larger than the second determination value.

According to this ignition timing control apparatus for an internal combustion engine, the correction degree parameter indicative of a degree to which the ignition timing should be corrected toward the retarding side is calculated on a cylinder-by-cylinder basis in accordance with the knock intensity parameter indicative of the intensity of knocking, and the ignition timing is corrected on a cylinder-by-cylinder basis in accordance with the correction degree parameter. Here, the correction degree parameter is calculated only for one cylinder corresponding to one of the knock intensity parameters when the one knock intensity parameter is larger than the first determination value and is smaller than the second determination value larger than the first determination value, and the correction degree parameters are calculated for all the cylinders when the one knock intensity parameter is equal to or larger than the second determination value, so that only the ignition timing for the one cylinder corresponding to the one knock intensity parameter is corrected toward the retarding side when the one knock intensity parameter is larger than the first determination value and is smaller than the second determination value, while the ignition timings for all the cylinders are corrected toward the retarding side when the one knock intensity parameter is equal to or larger than the second determination value. Accordingly, by appropriately setting the second determination value, the ignition timings for all the cylinders can be collectively corrected toward the retarding side, for example, when a fuel exhibits poor properties and a low octane number, thus making it possible to more rapidly and effectively restrain knocking from occurring as the overall engine. As a result, the lifetime of the internal combustion engine can be extended.

To achieve the above object, according to a second aspect of the present invention of claim 4, there is provided an ignition timing control method for an internal combustion engine, comprising the steps of determining ignition timings for a plurality of cylinders of the internal combustion engine on a cylinder-by-cylinder basis; detecting a knock intensity parameter indicative of the intensity of knocking on a cylinder-by-cylinder basis; calculating a correction degree parameter indicative of a degree to which the ignition timing should be corrected toward a retarding side in accordance with the detected knock intensity parameter on a cylinder-by-cylinder basis; and correcting the ignition timing toward the retarding side on a cylinder-by-cylinder basis in accordance with the calculated correction degree parameter, wherein the step of correcting a correction degree parameter includes calculating the correction degree parameter only for one cylinder corresponding to one of the knock intensity parameters when the one knock intensity parameter is larger than a first determination value and is smaller than a second determination value larger than the first determination value, and calculating the correction degree parameters for all the cylinders when the one knock intensity parameter is equal to or larger than the second determination value.

This ignition timing control method provides the same advantageous effects as described above concerning the ignition timing control apparatus according to the first aspect of the present invention.

In the ignition timing control apparatus for an internal combustion engine described above, the knock intensity parameter detecting means comprises cylinder inner pressure parameter detecting means for detecting a cylinder inner pressure parameter indicative of a cylinder inner pressure on a cylinder-by-cylinder basis; engine rotational speed detecting means for detecting the rotational speed of the internal combustion engine as an engine rotational speed; and knock intensity parameter calculating means for calculating the knock intensity parameter based on a filtered value derived by applying predetermined bandpass filtering to the cylinder inner pressure parameter, and setting a pass band of the predetermined bandpass filtering in accordance with the detected engine rotational speed.

According to this feature of the ignition timing control apparatus for an internal combustion engine, the cylinder inner pressure parameter indicative of the cylinder inner pressure is detected on a cylinder-by-cylinder basis, the knock intensity parameter is calculated based on the filtered value which is derived by applying the predetermined bandpass filtering to the cylinder inner pressure parameter, and the pass band of the predetermined bandpass filtering is set in accordance with the engine rotational speed. Here, when the knocking intensity parameter indicative of the intensity of knocking is calculated based on the cylinder inner pressure parameter, the cylinder inner pressure parameter exhibits characteristics susceptible to the influence of vibrations of the internal combustion engine due to the fact that it indicates the cylinder inner pressure. As a result, the knock intensity parameter is susceptible to the influence of vibration noise associated with the rotation of the internal combustion engine, and includes such vibration noise other than data indicative of the knocking intensity. In this event, the vibration noise included in the cylinder inner pressure parameter is such that it amplitude at the resonant frequency of the cylinder inner pressure parameter varies in accordance with the engine rotational speed, causing associated variations in the S/N ratio of the knock intensity parameter. Thus, when the knock intensity parameter is calculated, by setting the pass band of the predetermined bandpass filtering in a frequency band in which a satisfactory S/N ratio can be ensured in the knock intensity parameter, and applying such bandpass filtering to the cylinder inner pressure parameter, data indicative of the knocking intensity alone can be effectively extracted from the cylinder inner pressure parameter. As a result, the knock intensity parameter can be calculated with a higher accuracy to further effectively restrain the knocking (it should be noted that "detection" such as "detection of the knock intensity parameter," "detection of the cylinder inner pressure parameter, " and "detection of the engine rotational speed" is not limited to directly detecting them by sensors or the like, but includes calculating these values based on other parameters).

The ignition timing control method for an internal combustion engine described above, the step of detecting a knock intensity parameter includes detecting a cylinder inner pressure parameter indicative of a cylinder inner pressure on a cylinder-by-cylinder basis; detecting the rotational speed of the internal combustion engine as an engine rotational speed; and calculating the knock intensity parameter based on a filtered value derived by applying predetermined bandpass filtering to the cylinder inner pressure parameter, and setting a pass band of the predetermined bandpass filtering in accordance with the detected engine rotational speed.

This feature of the ignition timing control method provides the same advantageous effects as described above concerning the ignition timing control apparatus according to the first aspect of the invention.

Preferably, in the ignition timing control apparatus for an internal combustion engine described above, the knock intensity parameter calculating means sets a pass band of the predetermined bandpass filtering in a predetermined first frequency band when the engine rotational speed is lower than a predetermined rotational speed, and in a predetermined second frequency band higher than the predetermined first frequency band when the engine rotational speed is equal to or higher than the predetermined rotational speed.

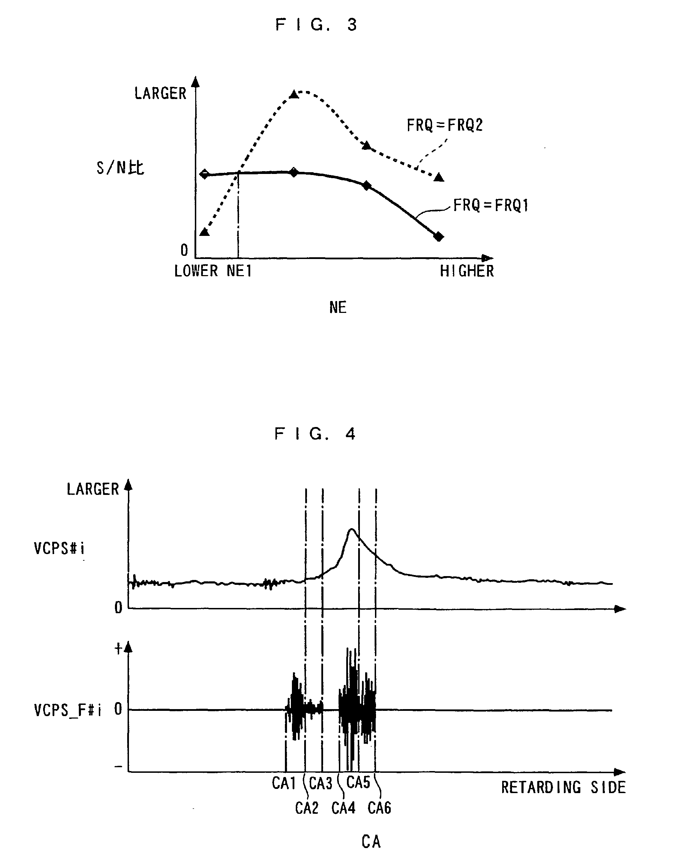

When the knock intensity parameter is calculated based on the value derived by applying the predetermined bandpass filtering to the cylinder inner pressure parameter (hereinafter called the "filtered value") as in this ignition timing control apparatus, the S/N ratio of the filtered value varies with a predetermined rotational speed of the engine rotational speed as a threshold value when the pass band of the bandpass filtering is changed, as confirmed in an experiment made by the Applicant. Particularly, by setting the pass band of the bandpass filtering at a higher value in a region in which the engine rotational speed is equal to or higher than the predetermined rotational speed, as compared with a region lower than the predetermined rotational speed, it has been confirmed that the S/N ratio is improved (see Fig. 3, later described). Therefore, according to this preferred embodiment of the ignition timing control apparatus for an internal combustion engine, the pass band of the predetermined bandpass filtering is set in the predetermined first frequency band when the engine rotational speed is lower than the predetermined rotational speed, and in the predetermined second frequency band higher than the predetermined first frequency band when the engine rotational speed is equal to or higher than the predetermined rotational speed, so that the S/N ratio of the filtered value can be improved without fail by appropriately setting these two pass bands. In this way, the knocking intensity parameter can be calculated with an even higher accuracy to further effectively restrain the knocking.

Preferably, in the ignition timing control method for an internal combustion engine described above, the step of calculating a knock intensity parameter includes setting the bandpass of the predetermined bandpass filtering to a predetermined first frequency band when the engine rotational speed is lower than a predetermined rotational speed, and to a predetermined second frequency band higher than the predetermined first frequency band when the engine rotational speed is equal to or higher than the predetermined rotational speed.

This preferred embodiment of the ignition timing control method provides the same advantageous effects as described above concerning the ignition timing control apparatus according to the first aspect of the invention.

Preferably, in the ignition timing control apparatus for an internal combustion engine of the present invention, the knock intensity parameter calculating means comprises first parameter calculating means for calculating the filtered value by applying the predetermined bandpass filtering to the cylinder inner pressure parameter detected in a predetermined crank angle section during a compression stroke, and calculating a first parameter for use in calculating the knock intensity parameter based on the filtered value; second parameter calculating means for calculating the filtered value by applying the predetermined bandpass filtering to the cylinder inner pressure parameter detected in a predetermined crank angle section during an expansion stroke, and calculating a second parameter for use in calculating the knock intensity parameter based on the filtered value; and parameter calculating means for calculating the knock intensity parameter in accordance with the calculated first parameter and the calculated second parameter, wherein the first parameter calculating means starts an operation of the predetermined bandpass filtering at a timing earlier than the start of the calculation of the first parameter, and the second parameter calculating means starts the operation of the predetermined bandpass filtering at a timing earlier than the start of the calculation of the second parameter.

According to this preferred embodiment of this ignition timing control apparatus for an internal combustion engine, the filtered value is calculated by applying the predetermined bandpass filtering to the cylinder inner pressure parameter detected in the predetermined crank angle section during the compression stroke, and the first parameter for use in calculating the knock intensity parameter is calculated based on this filtered value. Also, the filtered value is calculated by applying the predetermined bandpass filtering to the cylinder inner pressure parameter detected in the predetermined crank angle section during the expansion stroke, and the second parameter for use in calculating the knock intensity parameter is calculated based on this filtered value. Then, the knock intensity parameter is calculated in accordance with these first parameter and second parameter. Generally, the bandpass filtering is characterized in that initial noise temporarily increases immediately after the start thereof so that a long time is taken until its processing result stabilizes. In contrast, according to this preferred embodiment of this ignition timing control apparatus, since the predetermined bandpass filtering is started by the first parameter calculating means at a timing earlier than the start of the calculation of the first parameter, while the predetermined bandpass filtering is started by the second parameter calculating means at a timing earlier than the start of the calculation of the second parameter, the calculations of the first parameter and second parameter can be started at a time at which a temporary increase in the initial noise has converged, and the processing result has stabilized in the bandpass filtering, to calculate these parameters with a higher accuracy. As a result, the knocking intensity parameter can be calculated in accordance with these parameters with a further improved accuracy to further effectively restrain the knocking.

Preferably, in the ignition timing control method for an internal combustion engine described above, wherein the step of calculating a knock intensity parameter includes calculating the filtered value by applying the predetermined bandpass filtering to the cylinder inner pressure parameter detected in a predetermined crank angle section during a compression stroke, and calculating a first parameter for use in calculating the knock intensity parameter based on the filtered value; calculating the filtered value by applying the predetermined bandpass filtering to the cylinder inner pressure parameter detected in a predetermined crank angle section during an expansion stroke, and calculating a second parameter for use in calculating the knock intensity parameter based on the filtered value; and calculating the knock intensity parameter in accordance with the calculated first parameter and the calculated second parameter, wherein the step of calculating a first parameter includes starting an operation of the predetermined bandpass filtering at a timing earlier than the start of the calculation of the first parameter, and the step of calculating a second parameter includes starting the operation of the predetermined bandpass filtering at a timing earlier than the start of the calculation of the second parameter.

This preferred embodiment of the ignition timing control method provides the same advantageous effects as described above concerning the ignition timing control apparatus according to the first aspect of the invention.

The ignition timing control apparatus for an internal combustion engine described above further comprises maximum pressure angle detecting means for detecting a crank angle position at which the cylinder inner pressure presents a maximum value in the combustion cycle as a maximum pressure angle on a cylinder-by-cylinder basis based on the cylinder inner pressure parameter; target angle setting means for setting a target angle to which the maximum pressure angle is targeted on a cylinder-by-cylinder basis; and second correcting means for correcting the ignition timing on a cylinder-by-cylinder basis using a predetermined feedback control algorithm such that the maximum pressure angle reaches the target angle, wherein the correction degree parameter calculating means calculates the correction degree parameter for the one cylinder corresponding to the one knock intensity parameter to be a larger value of the degree to which the ignition timing is corrected toward the retarding side when the one knock intensity parameter is larger than the first determination value than when the one knock intensity parameter is equal to or smaller than the first determination value, and the target angle setting means sets the target angle for the one cylinder to a more retarding side when the one knock intensity parameter is larger than the first determination value than when the one knock intensity parameter is equal to or smaller than the first determination value.

According to this feature of the ignition timing control apparatus for an internal combustion engine, a crank angle position at which the cylinder inner pressure presents a maximum value in the combustion cycle is detected as the maximum pressure angle on a cylinder-by-cylinder basis based on the cylinder inner pressure parameter, the target angle to which the maximum pressure angle is targeted is set on a cylinder-by-cylinder basis, and the ignition timing is corrected by the second correcting means using the predetermined feedback control algorithm such that the maximum pressure angle reaches the target angle. Here, when one knocking intensity parameter is larger than the first determination value, the correction degree parameter for the one cylinder corresponding to the one knocking intensity parameter is calculated to be a larger value of the degree to which the ignition timing is corrected toward the retarding side when the one knock intensity parameter is larger than the first determination value than when the one knock intensity parameter is equal to or smaller than the first determination value, whereby the ignition timing for the one cylinder is corrected more toward the retarding side by the first correcting means than when it is equal to or smaller than the first determination value. Further, the target angle for the one cylinder is set to a more retarding side when the one knock intensity parameter is larger than the first determination value than when it is equal to or smaller than the first determination value, whereby the ignition timing is corrected by the second correcting means more toward the retarding side. In this way, when the correction degree parameter is larger than the first determination value, the direction in which the ignition timing is corrected either by the first correcting means or by the second correcting means can be matched such that the ignition timing is more retarded than when the correction degree parameter is smaller than a predetermined opposite value. As a result, a knocking restraining effect by the first ignition timing correcting means can be ensured while avoiding the correction of the ignition timing by the first correcting means from interfering with the feedback control of the maximum pressure angel to the target angle by the second ignition timing correcting means.

The ignition timing control method for an internal combustion engine described above, further comprises the steps of detecting a crank angle position at which the cylinder inner pressure presents a maximum value in the combustion cycle as a maximum pressure angle on a cylinder-by-cylinder basis based on the cylinder inner pressure parameter; setting a target angle to which the maximum pressure angle is targeted on a cylinder-by-cylinder basis; and correcting the ignition timing on a cylinder-by-cylinder basis using a predetermined feedback control algorithm such that the maximum pressure angle reaches the target angle, wherein the step of calculating a correction degree parameter comprises calculating the correction degree parameter for the one cylinder corresponding to the one knock intensity parameter to be a larger value of the degree to which the ignition timing is corrected toward the retarding side when the one knock intensity parameter is larger than the first determination value than when the one knock intensity parameter is equal to or smaller than the first determination value, and the step of setting a target angle comprises setting the target angle for the one cylinder to a more retarding side when the one knock intensity parameter is larger than the first determination value than when the one knock intensity parameter is equal to or smaller than the first determination value.

This ignition timing control method feature provides the same advantageous effects as described above concerning the ignition timing control apparatus according to the first aspect of the invention.

BRIEF DESCRIPTION OF THE DRAWINGS

Fig. 1 is a diagram generally showing the configuration of an ignition timing control apparatus according to one embodiment of the present invention, and an internal combustion engine to which the control apparatus is applied;
Fig. 2 is a block diagram generally showing the configuration of a knock determination controller;
Fig. 3 is a diagram showing a relationship between an S/N ratio of a filtered value VCPS_F#i of a detected voltage and an engine rotational speed NE;
Fig. 4 is a timing chart showing an example of a calculation result of the filtered value VCPS_F#i by a bandpass filtering unit in this embodiment;
Fig. 5 is a timing chart showing an example of a calculation result of the filtered value VCPS_F#i when a start point of a noise BPF section is set at the same crank angle position as a start point of a noise level calculation section, and when a start point of a knock BPF section is set at the same crank angle position as the start point of the knock level calculation section, for purposes of comparison;
Fig. 6 is a block diagram generally showing the configuration of an ignition timing controller;
Fig. 7 is a diagram showing an example of a map used in calculating a basic target angle θPMAX_CMD_MAP;
Fig. 8 is a diagram showing an example of a map used in calculating a non-linear input Un1#i;
Fig. 9 is a flow chart showing control processing executed at a control period ΔTn;
Fig. 10 is a flow chart showing fourth cylinder #4 knock determination processing;
Fig. 11 is a flow chart showing processing of calculating a knock intensity SNA_S#4;
Fig. 12 is a flow chart showing processing of calculating a filtered value VCPS_F#4;
Fig. 13 is a flow chart showing ignition timing control processing;
Fig. 14 is a flow chart showing the contents of fourth cylinder #4 ignition timing control processing;
Fig. 15 is a flow chart showing processing of calculating a knock correction term IGCRK#4;
Fig. 16 is a flow chart showing processing of updating correction coefficient learning value KIGKN#i;
Fig. 17 is a flow chart showing processing of calculating maximum pressure angle correction term IGSLD#4;
Fig. 18 is a timing chart for describing operations when relatively weak knocking occurs in the fourth cylinder #4 during ignition timing control; and
Fig. 19 is a timing chart for describing operations when strong knocking occurs in the fourth cylinder #4 during ignition timing control.

DETAILED DESCRIPTION OF THE EMBODIMENT

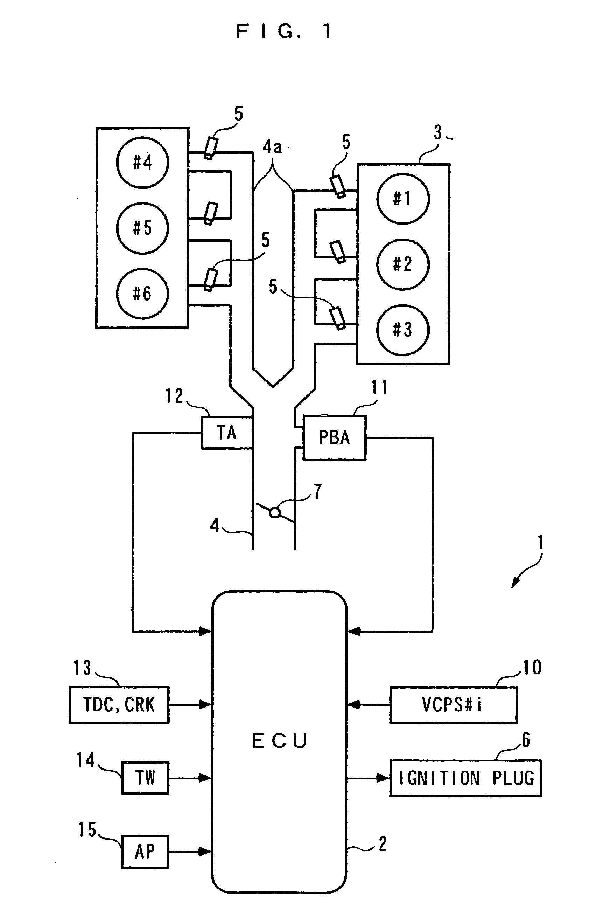

In the following, an ignition timing control apparatus for an internal combustion engine according to one embodiment of the present invention will be described with reference to the drawings. As illustrated in Fig. 1, the ignition timing control apparatus 1 of this embodiment comprises an ECU 2, and an ignition timing is controlled by this ECU 2 for an internal combustion engine (hereinafter called the "engine") 3, as described below.

As illustrated, the engine 3 is a V-type six-cylinder gasoline engine which comprises a first to a third cylinder #1, #2, #3 in a right bank, and a fourth to a sixth cylinder #4, #5, #6 in a left bank. An intake pipe 4 is connected to these first to sixth cylinders #1 - #6 (a plurality of cylinders) through intake manifolds 4a, and a fuel injection valve 5 is attached at each branch of the intake manifold 4a to face an intake port, not shown, of each cylinder.

The fuel injection valve 5 is arranged at each branch so as to inject a fuel into each branch, and is electrically connected to ECU 2, such that ECU 2 controls a valve opening time and a valve opening timing of the fuel injection valve 5 in accordance with an operating condition of the engine 3. In other words, fuel injection control is executed.

Also, an ignition plug 6 and a cylinder inner pressure sensor 10 are attached to a cylinder head of the engine 3 for each cylinder (only one each of both is shown). This ignition plug 6 is also electrically connected to the ECU 2, such that the ECU 2 controls a discharge state to burn an air/fuel mixture within a combustion chamber at a timing in accordance with an ignition timing, later described. In other words, ignition timing control is executed. The foregoing fuel injection control and ignition timing control are executed in the six cylinders #1 - #6 in the order of #1 → #5 → #3 → #6 → #2 → #4.

On the other hand, the cylinder inner pressure sensor 10 is a piezo-electric type one integrated with the ignition plug 6, and distorts in association with a change in the pressure within each cylinder, i.e., the cylinder inner pressure to output a detection signal indicative of the cylinder inner pressure to the ECU 2. The ECU 2 calculates the cylinder inner pressure PCYLF#i and the like based on a voltage value VCPS#i of the detection signal (hereinafter called the "detected voltage") of the cylinder inner pressure sensor 10. In this connection, #i (=#1-#6) in "detected voltage VCPS#i" and "cylinder inner pressure PCYLF#i" is a cylinder number value indicative of a cylinder number. In the following description, when labeled "PCYLF#1," this indicates the cylinder inner pressure of the first cylinder #1, and when labeled "PCYLF#i," this indicates the cylinder inner pressure of all the six cylinders #1 - #6. This aspect applies to a variety of parameters later described, and #i in a variety of parameters is omitted as appropriate.

In this connection, the cylinder inner pressure sensor 10 corresponds to knock intensity parameter detecting means and cylinder inner pressure parameter detecting means, and the detected voltage VCPS corresponds to a cylinder inner pressure parameter in this embodiment.

Also, an intake pipe inner pressure sensor 11 and an intake air temperature sensor 12 are disposed at locations downstream of a throttle valve 7 of the intake pipe 4. The intake pipe inner pressure sensor 11, which comprises, for example, a semiconductor pressure sensor, detects a pressure PBA within the intake pipe 4 (hereinafter called the "intake pipe inner pressure"), and outputs a detection signal indicative of the pressure PBA to the ECU 2. This intake pipe inner pressure PBA is detected as an absolute pressure. The intake air temperature sensor 12 detects the temperature TA of air flowing through the intake pipe 4 (hereinafter called the "intake air temperature"), and outputs a detection signal indicative of the temperature TA to the ECU 2.

A crank angle sensor 13, a water temperature sensor 14, and accelerator opening sensor 15 are also connected to the ECU 2. The crank angle sensor 13 comprises a magnet rotor and an MRE pickup, and outputs a CRK signal and a TDC signal, both of which are pulse signals, in association with rotations of a crank shaft, not shown, to the ECU 2. The CRK signal is outputted one pulse every predetermined crank angle (for example, 1°), such that the ECU 2 calculates a rotational speed NE of the engine 3 (hereinafter called the "engine rotational speed") based on the CRK signal. In this connection, the crank angle sensor 13 corresponds to engine rotational speed detecting means in this embodiment.

The TDC signal in turn is a signal which indicates that the piston 3b of each cylinder 3a is at a predetermined crank angle position slightly in front of a TDC position of the intake stroke. In the six-cylinder engine 3 of this embodiment, one pulse is outputted every 120° of the crank angle. The TDC signal for the first cylinder #1 has a pulse width which is slightly longer such that it can be distinguished from other TDC signals. The ECU 2 calculates a crank angle position CA based on the TDC signal and CRK signal for the first cylinder #1.

The water temperature sensor 14 detects an engine water temperature TW which is the temperature of cooling water which circulates within a cylinder block of the engine 3, and outputs a detection signal indicative of the engine water temperature TW to the ECU 2. Further, the accelerator opening sensor 15 detects an amount AP by which the driver treads on an accelerating pedal, not shown, of the vehicle (hereinafter called the "accelerator opening"), and outputs a detection signal indicative of the accelerator opening AP to the ECU 2.

The ECU 2, which is based on a microcomputer which comprises a CPU, a RAM, a ROM, an I/O interface (none of which is shown), and the like, determines the operating condition of the engine 3, and executes the ignition timing control and the like in accordance with the detection signals of a variety of the aforementioned sensors 10 - 15.

It should be noted that in this embodiment, the ECU 2 corresponds to ignition timing determining means, knock intensity parameter detecting means, correction degree parameter calculating means, first correcting means, engine rotational speed detecting means, knock intensity parameter calculating means, first parameter calculating means, second parameter calculating means, parameter calculating means, maximum pressure angle detecting means, target angle setting means, and second correcting means.

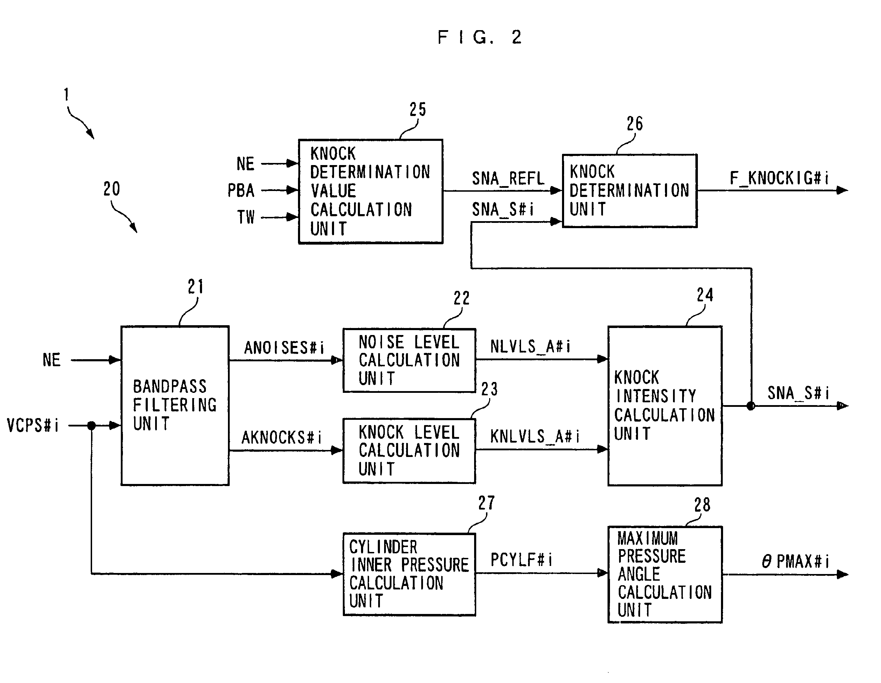

Next, the ignition timing control apparatus 1 of this embodiment will be generally described in configuration. As illustrated in Figs. 2 and 6, the ignition timing control apparatus 1 comprises a knock determination controller 20 and an ignition timing controller 40, where these controllers 20, 40 are specifically implemented by the ECU 2.

It should be noted that in this embodiment, the knock determination controller 20 corresponds to the knock intensity parameter detecting means, knock intensity parameter calculating means, first parameter calculating means, second parameter calculating means, parameter calculating means, and maximum pressure angle detecting means.

Further, the ignition timing controller 40 corresponds to the ignition timing determining means, correction degree parameter calculating means, first correcting means, target angle setting means, and second correcting means.

The knock determination controller 20 executes knocking determination processing and the like on a cylinder-by-cylinder basis, and comprises, as shown in Fig. 2, a bandpass filtering unit 21, a noise level calculation unit 22, a knock level calculation unit 23, a knock intensity calculation unit 24, a knock determination value calculation unit 25, a knock determination unit 26, a cylinder inner pressure calculation unit 27, and a maximum pressure angle calculation unit 28.

It should be noted that in each equation described below, each discrete data followed by a symbol (n) indicates discrete data which is sampled or calculated at a predetermined control period $\Delta Tn$ (period synchronized to the generation of the CRK signal, i.e., at a period of crank-angle 1°), where the symbol n represents the turn of each discrete data sampling or calculation timing. For example, the symbol n indicates a value which is sampled or calculated at a current control timing, and a symbol n-1 indicates a value which has been sampled or calculated at the preceding control timing. This applies to the following discrete data. Also, in the following description, the symbol (n) and the like in each discrete data are omitted as appropriate.

First, the bandpass filtering unit 21 calculates an integrated value ANOISES#i for noise level calculation, and an integrated value AKNOCKS#i for knock level calculation on a cylinder-by-cylinder basis based on the detected voltage VCPS#i and the engine rotational speed NE, as will be later described.

Specifically, the integrated value ANOISES#i for noise level calculation is calculated as described below. First, in a noise bandpass filter section (hereinafter called the "noise BPF section") of each cylinder, the detected voltage VCPS#i is sampled at the aforementioned control period $\Delta Tn$, and this sampled value VCPS#i(n) is subjected to a bandpass filtering expressed by the following equation (1) to calculate a filtered value VCPS_F#i of the detected voltage:

$$
\begin{aligned}
VCPS\_F\#i(n) = {} & b1 \cdot VCPS\#i(n) + b2 \cdot VCPS\#i(n-1) + \cdots + bm \cdot VCPS\#i(n-m) \\
& + a1 \cdot VCPS\_F\#i(n-1) + a2 \cdot VCPS\_F\#i(n-2) \\
& + \cdots + am' \cdot VCPS\_F\#i(n-m') \qquad \cdots \cdots (1)
\end{aligned}
$$

In the above Equation (1), b1 - bm and a1 - am' are predetermined filter coefficients, and m and m' are predetermined integers equal to or larger than the value of two. For a reason set forth below, a set of high rotation values b1H - bmH and a set of low rotation values b1L - bmL are prepared for these filter coefficients b1 - bm which are switched to one of the two sets in accordance with the engine rotational speed NE. Also, the filter coefficients b1 - bm and filtered values VCPS_F#i(n-1) - VCPS_F#i(n-m) have initial values which are all set to the value of zero.

Next, in a noise level calculation section (for example CA2 - CA3 in Fig. 4, later described) in a compression stroke of each cylinder, the integrated value ANOISES#i for noise level calculation is calculated by the following Equation (2) based on the filtered value VCPS_F#i of the detected voltage:

$$
ANOISES\#i(n) = \sum_{j=1}^{n} |VCPS\_F\#i(j)| \qquad \cdots \cdots (2)
$$

Here, crank angle positions at the start point and end point of the noise level calculation section (CA2, CA3 in Fig. 4) are set by searching a map, not shown, in accordance with the engine rotational speed NE. The end point of the noise BPF section in turn is set at the same crank angle position as the end point of the noise level section, and the start point (CA1 in Fig. 4) of the noise BPF section is set at a crank angle position significantly advanced from the start point of the noise level calculation section by searching a map, not shown, in accordance with the engine rotational speed NE. The reason for such settings will be described later.

Fig. 3 is the result of an experiment which shows a relationship between an S/N ratio of the filtered value VCPS_F#i of the detected voltage and the engine rotational speed NE. A curve indicated by a solid line in Fig. 3 is an example when the filter coefficients b1 - bm are set to one set of values b1L - bmL for low rotations to set its pass band to a band in which a predetermined first frequency FRQ1 is mainly passed, i.e., when a pass frequency FRQ of the bandpass filter is set at the first frequency FRQ1. On the other hand, a curve indicated by a broken line in Fig. 3 is an example when the aforementioned filter coefficients b1 - bm are set to one set of values b1H - bmH for high rotations to set its pass band to a band in which a predetermined second frequency FRQ2 higher than the predetermined first frequency FRQ1 is mainly passed, i.e. , when the pass frequency FRQ is set at the second frequency FRQ2.

These first and second frequencies FRQ1, FRQ2 are set at a second-order and a third-order resonant frequency, respectively, of the detected voltage VCPS#i with respect to the engine rotational speed NE. This setting is made for the following reason. Specifically, since the cylinder inner pressure sensor 10 is adapted to detect the pressure within the cylinder, it is susceptible to the influence of vibration noise caused by the engine rotational speed NE, so that the detected voltage VCPS#i exhibits such characteristics that its amplitude presents a maximum value at the resonant frequency with the engine rotational speed NE. Accordingly, in this embodiment, the two frequencies FRQ1, FRQ2, which are pass frequencies of the bandpass filter, are set to the second-order and third-order resonant frequencies, respectively, of the detected voltage VCPS#i with respect to the engine rotational speed NE in order to ensure a highest possible S/N ratio of the filtered value VCPS_F#i of the detected voltage.

Referring to Fig. 3, it can be seen that the S/N ratio of the filtered value VCPS_F#i presets a better value when the pass frequency FRQ of the bandpass filter is set at the first frequency FRQ1 in a low rotation range NE<NE1, where NE1 is a predetermined value of the engine rotational speed NE and serves as a threshold value, and presents a better value when the pass frequency FRQ is set at the second frequency FRQ2 in a high rotation range NE ≧ NE1. Accordingly, in this embodiment, in order to ensure a satisfactory S/N ratio for the filtered value VCPS_F#i, the filter coefficients b1 - bm are set to the values b1L - bmL for low rotations, respectively, when NE<NE1, whereby the pass frequency FRQ of the bandpass filter is set at the first frequency FRQ1. For the same reason, when NE≧NE1, the filter coefficients b1 - bm are set to the values b1H - bmH for high rotations, respectively, whereby the pass frequency FRQ of the bandpass filter is set at the second frequency FRQ2.

On the other hand, the integrated value AKNOCKS#i for knock level calculation is calculated as described below. First, in a knock bandpass filter section (hereinafter called the "knock BPF section") of each cylinder, the detected voltage VCPS#i is sampled at the aforementioned control period ΔTn, and the sampled value is subjected to the aforementioned bandpass filtering of Equation (1) to calculate the filtered value VCPS_F#i of the detected voltage.

Next, in a knock level calculation section (CA5 - CA6 in Fig. 4) in an expansion stroke of each cylinder, the integrated value AKNOCKS#i for knock level calculation is calculated by the following Equation (3) on a cylinder-by-cylinder basis based on the filtered value VCPS_F#i of the detected voltage:

$$\text{AKNOCKS\#i}\,(n) = \sum_{j=1}^{n} |\text{VCPS\_F\#i}\,(j)| \qquad\qquad \cdots\cdots\, (3)$$

Here, crank angle positions (for example, CA5, CA6 in Fig. 4) at the start point and end point of the knock level calculation section are determined by searching a map, not shown, in accordance with the engine rotational speed NE. The end point of the aforementioned knock BPF section in turn is set at the same crank angle as the end point of the knock level section, while the start point (CA4 in Fig. 4) of the knock BPF section is set at a crank angle position significantly advanced from the start point of the knock level calculation section by searching a map, not shown, in accordance with the engine rotational speed NE.

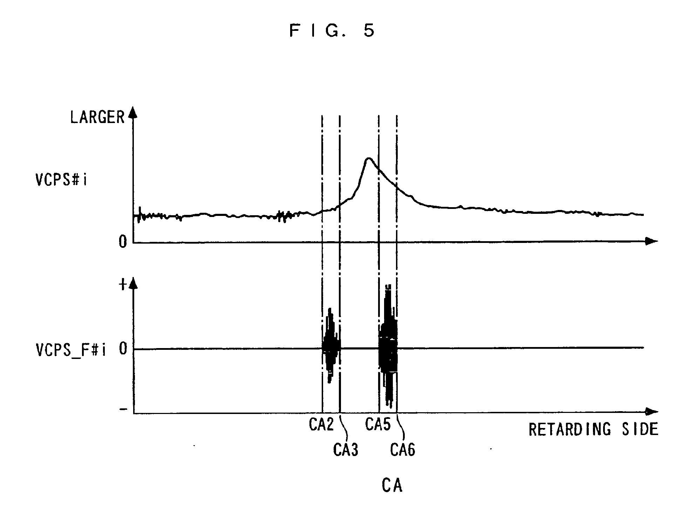

The reason for which the start point of the knock BPF section is set in the foregoing manner, and the reason for which the start point of the noise BPF section is set in the foregoing manner will be described with reference to Figs. 4 and 5. Fig: 4 shows an example of the result of calculating the filtered value VCPS_F#i when the start point CA1 of the noise BPF section is set at a crank angle position CA significantly advanced from the start point CA2 of the noise level calculation section, and the start point CA4 of the knock BPF section is set at a crank angle position CA significantly advanced from the start point CA5 of the knock level calculation section. Fig. 5 in turn shows an example of the result of calculating the filtered value VCPS_F#i when the start point of the noise BPF section is set at the same crank angle position CA as the start point CA2 of the noise level calculation section, and the start point of the knock BPF section is set at the same crank angle position CA as the start point CA5 of the knock level calculation section, for purposes of comparison.

First, in the example of the calculation result shown in Fig. 5, it can be seen that in both the noise BPF section and knock BPF section, the filtered value VCPS_F#i of the detected voltage presents the amplitude suddenly increasing in a noise fashion immediately after the calculation of the bandpass filter starts, so that its calculation accuracy is low. This is attributable to the characteristics of the bandpass filtering which involves initial noise which temporarily increases immediately after the start of the calculation, and requires a certain time until the calculation result stabilizes.

On the other hand, in the example of the calculation result according to this embodiment shown in Fig. 4, it can be seen that though initial noise temporarily increases immediately after the calculation of the bandpass filter starts, the calculation of the filtered value VCPS_F#i of the detected voltage is started at a time point (CA=CA2 or CA=CA5) at which the increase of such initial noise has converged, so that the filtered value VCPS_F#i of the detected voltage has the amplitude smaller than the example shown in Fig. 5, and its calculation accuracy is improved. Specifically, in this embodiment, in order to start the calculations of the two integrated values ANOISES#i and AKNOCKS#i while the filtered value VCPS_F#i of the detected voltage is stable with the intention to ensure a satisfactory calculation accuracy for the two integrated values ANOISES#i and AKNOCKS#i, the start points of the noise BPF section and knock BPF section are set as described above.

Also, as is apparent from a comparison of the aforementioned Equations (2), (3), the integrated value ANOISES#i for noise level calculation, and the integrated value AKNOCKS#i for knock level calculation are calculated by the same equation, with their calculation sections different from each other.

It should be noted that in this embodiment, the integrated value ANOISES for noise level calculation corresponds to a first parameter, the integrated value AKNOCKS for knock level calculation corresponds to a second parameter, the first frequency FRQ1 corresponds to a first frequency band, and the second frequency FRQ2 corresponds to a second frequency band.

Next, the aforementioned noise level calculation unit 22 calculates a noise level NLVLS_A#i on a cylinder-by-cylinder basis by applying predetermined first-order delay filtering to the integrated value ANOISES#i for noise level calculation. The aforementioned knock level calculation unit 23 in turn calculates a knock level KNLVLS_A#i on a cylinder-to-cylinder basis by applying predetermined upper limit processing to the integrated value AKNOCKS#i for knock level calculation.

Further, the aforementioned knock intensity calculation unit 24 calculates a knock intensity SNA_S#i on a cylinder-by-cylinder basis by the following Equation (4). This knock intensity SNA_S#i represents the intensity of knocking in a cylinder #i . It should be noted that in this embodiment, the knock intensity SNA_S corresponds to a knock intensity parameter.

$$ SNA\_S\#i\,(n) = \log_e \left[ \frac{KNLVLS\_A\#i\,(n)}{NLVLS\_A\#i\,(n)} \right] \qquad\qquad \cdots\cdots\ (4) $$

On the other hand, the aforementioned knock determination value calculation unit 25 calculates a map value for a knock determination value by searching a map, not shown, in accordance with the engine rotational speed NE and intake pipe inner pressure PBA, and corrects the map value with a correction coefficient calculated in accordance with the engine water temperature TW to calculate the knock determination value SNA_REFL. It should be noted that in this embodiment, the knock determination value SNA_REFL corresponds to a first determination value.

Also, the aforementioned knock determination unit 26 sets a value for a knock determination flag F_KNOCKIG#i on a cylinder-by-cylinder basis based on the result of a comparison of the knock intensity SNA_S#i with the knock determination value SNA_REFL. Specifically, the knock determination flag F_KNOCKIG#i is set to "1" when SNA_S#i>SNA_REFL, and the knock determination flag F_KNOCKIG#i is set to "0" when SNA_S#i≦SNA_REFL.

Further, the cylinder inner pressure calculation unit 27 calculates a cylinder inner pressure PCYLF#i on a cylinder-by-cylinder basis by applying predetermined filtering, predetermined model fitting, and the like to the detected voltage VCPS#i of the cylinder inner pressure sensor 10.

Next, the maximum pressure angle calculation unit 28 calculates a maximum pressure angle θPMAX#i on a cylinder-by-cylinder basis with reference to a change in the cylinder inner pressure PCYLF#i in a maximum pressure angle calculation section. This maximum pressure angle calculation section is a section which has a start point at an air/fuel mixture light-off timing and an end point at a crank angle position CA retarded therefrom by a predetermined value.

In the foregoing manner, the knock determination controller 20 of this embodiment calculates the knock intensity SNA_S#i, knock determination flag F_KNOCKIG#i, and maximum pressure angle θPMAX#i on a cylinder-by-cylinder basis.

Next, the aforementioned ignition timing controller 40 will be described. As described below, this ignition timing controller 40 is adapted to calculate an ignition timing IGLOGCL#i on a cylinder-by-cylinder basis, and comprises a basic ignition timing calculation unit 41, a correction term calculation unit 42, a knock correction term calculation unit 43, an adder 44, a basic target angle calculation unit 45, an IMEP correction value calculation unit 46, an adder 47, a maximum pressure angle controller 48, and an ignition timing calculation unit 49, as shown in Fig. 6.

It should be noted that in each equation described below, each discrete data followed by a symbol (k) indicates discrete data which is sampled or calculated at a predetermined control period ΔTk (period synchronized to the generation of the TDC signal, i.e., at a period of crank angle 120°), where the symbol k represents the turn of each discrete data sampling or calculation timing. Also, in the following description, the symbol (k) and the like in each discrete data are omitted as appropriate.

First, the basic ignition timing calculation unit 41 calculates a basic ignition timing IGMAP on a cylinder-by-cylinder basis. Specifically, a required torque PMCMD is calculated by searching a map, not shown, in accordance with the engine rotational speed NE and accelerator opening AP, and the basic ignition timing IGMAP is calculated by searching a map, not shown, in accordance with the required torque PMCMD and engine rotational speed NE.

The correction term calculation unit 42 in turn calculates a correction term IGCRT#i on a cylinder-by-cylinder basis by searching a variety of maps, not shown, in accordance with a variety of parameters such as the intake air temperature TA, engine water temperature TW and the like.

Further, the knock correction term calculation unit 43 calculates a knock correction term IGCRK#i on a cylinder-by-cylinder basis in accordance with the knock determination flag F_KNOCKIG#i, knock intensity SNA_S#i, engine rotational speed NE, and intake pipe inner pressure PBA, as will be later described.

Then, the adder 44 calculates a corrected ignition timing IGLOG#i by the following Equation (5):

$$IGLOG\#i(k) = IGMAP(k) + IGCRT\#i(k) + IGCRK\#i(k) \qquad \cdots\cdots (5)$$

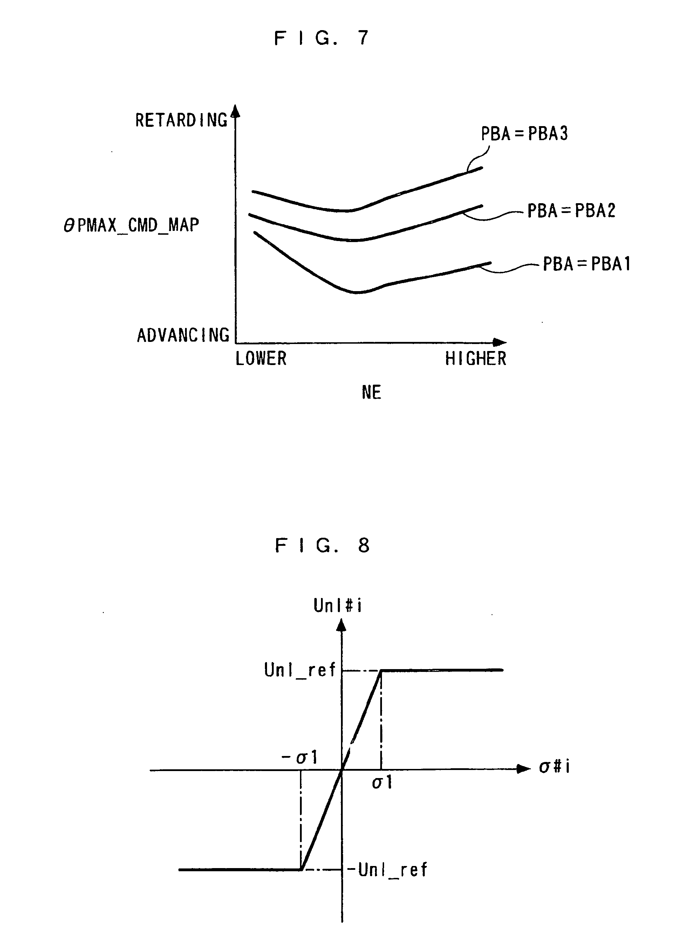

On the other hand, the aforementioned basic target angle calculation unit 45 calculates a basic target angle θPMAX_CMD_MAP by searching a map shown in Fig. 7 in accordance with the engine rotational speed NE and intake pipe inner pressure PBA. In Fig. 7, PBA1 - PBA3 are predetermined values of the intake pipe inner pressure PBA which satisfy the relationship of PBA1<PBA2<PBA3. In this map, the basic target angle θPMAX_CMD_MAP is set at a more retarded value as the intake pipe inner pressure PBA is higher, and is set at a more retarded value as the engine rotational speed NE is higher in a high rotation range. This setting is made because a knock margin is smaller as an engine load is higher or as the engine rotational speed NE is higher in the high rotation range.

Also, the IMEP correction value calculation unit 46 calculates an IMEP correction value DθPMAX#i in accordance with the maximum pressure angle θPMAX#i and the like. Next, the adder 47 calculates a target angle θPMAX_CMD#i by the following Equation (6):

$$\theta PMAX\_CMD\#i(k) = \theta PMAX\_CMD\_MAP(k) + D\theta PMAX\#i(k) + IGCRK\#i(k)$$
$$\cdots\cdots (6)$$

Further, the aforementioned maximum pressure angle controller 48 calculates a maximum pressure angle correction term IGSLD#i on a cylinder-by-cylinder basis as described below. First, a control input USLIG#i is calculated in accordance with a sliding mode control algorithm expressed by the following Equations (7) - (12):

$$USLIG\#i(k) = Ueq\#i(k) + Urch\#i(k) + Uadp\#i(k) + Unl\#i(k) \qquad \cdots\cdots (7)$$

$$Ueq\#i(k) = \frac{1}{B1}\{(1 - POLE - A1)\cdot\theta PMAX\#i(k) + (POLE - A2)\cdot\theta PMAX\#i(k-1)$$
$$+ \theta PMAX\_CMD\#i(k+1) + (POLE - 1)\cdot\theta PMAX\_CMD\#i(k)$$
$$- POLE\cdot\theta PMAX\_CMD\#i(k-1) - C1\} \qquad \cdots\cdots (8)$$

$$Urch\#i(k) = \frac{-Krch}{B1}\cdot\sigma\#i(k) \qquad \cdots\cdots (9)$$

$$Uadp\#i(k) = \frac{-Kadp}{B1}\cdot\sum_{j=1}^{k}\sigma\#i(j) \qquad \cdots\cdots (10)$$

$$\sigma\#i(k) = E\#i(k) + POLE\cdot E\#i(k-1) \qquad \cdots\cdots (11)$$

$$E\#i(k) = \theta PMAX\#i(k) - \theta PMAX\_CMD\#i(k) \qquad \cdots\cdots (1\,2)$$

As shown in the above Equation (7), the control input USLIG#i is calculated as a sum total of an equivalent control input Ueq#i, a reaching law input Urch#i, an adaptive law input Uadp#i, and a non-linear input Unl#i.

The equivalent control input Ueq#i is calculated by Equation (8). In Equation (8), A1, A2, B1, C1 represent model parameters of a model, later described, and are set at predetermined values. Alternatively, these model parameters A1, A2, B1, C1 may be identified by an on-board identifier, or these model parameters A1, A2, B1, C1 may be calculated by searching a model parameter scheduler (map) in accordance with an operating condition. Also, in Equation (8), POLE is a switching function setting parameter and is set at a value which satisfies the relationship of -1<POLE<0.

The reaching law input Urch#i in turn is calculated by Equation (9). In this Equation (9), Krch represents a predetermined reaching law gain, and σ#i represents a switching function defined as in Equation (11). E#i in Equation (11) represents a following error defined by Equation (12). Further, the adaptive law input Uadp#i is calculated by Equation (10), and in this Equation (10), Kadp represents a predetermined adaptive law gain.

On the other hand, the non-linear input Unl#i is calculated by searching a map shown in Fig. 8 in accordance with the switching function σ#i. In Fig. 8, σ1 indicates a predetermined value of the switching function σ#i, while Un1_ref indicates a predetermined value of the non-linear input Un1#i. In this map, the non-linear input Unl#i is set at a larger value as the switching function σ#i is larger when -σ1 $\leq$ σ#i $\leq$ σ1, and set at |Un1#i| = Un1_ref when σ1<|σ#i|. This is intended to increase a converging speed of the maximum pressure angle θPMAX#i to the target angle θPMAX_CMD#i by the non-linear input Unl#i when the switching function σ#i has a small absolute value, i.e., when there is a low degree of alienation between the maximum pressure angle θPMAX#i and the target angle θPMAX_CMD#i. Conversely, when there is a high degree of alienation between the maximum pressure angle θPMAX#i and the target angle θPMAX_CMD#i, the non-linear input Unl#i is set at a constant value to provide a low-gain input which has a low degree of influence as compared with the other inputs, to ensure the stability of control.

In this connection, the above Equations (7) - (12) are derived in the following manner. Specifically, when a system which has the control input USLIG#i as a control input and the maximum pressure angle θPMAX#i as a controlled variable is modeled as a discrete time system model, the following Equation (13) is derived. By applying a sliding mode control theory to this model, the aforementioned Equations (7) - (12) are derived.

$$\theta PMAX\#i(k+1) = A1 \cdot \theta PMAX\#i(k) + A2 \cdot \theta PMAX\#i(k-1) + B1 \cdot USLIG\#i(k) + C1$$
$$\cdots\cdots (1\,3)$$

Next, a predetermined limit processing is applied to the control input USLIG#i to calculate the maximum pressure angle correction term IGSLD#i. In the foregoing manner, the maximum pressure angle controller 48 calculates the maximum pressure angle correction term IGSLD#i as a value for converging the maximum pressure angle θPMAX#i to the target angle θPMAX_CMD#i.

Further, the aforementioned ignition timing calculation unit 49 calculates the sum of the corrected ignition timing IGLOG#i and maximum pressure angle correction term IGSLD#i calculated in the foregoing manner, and applies predetermined limit processing to the sum to calculate the ignition timing IGLOGCL#i. More specifically, the ignition timing IGLOGCL#i is limited to fall under a value within a range defined by a predetermined upper and lower limit value IGLOG_H, IGLOG_L. In the foregoing manner, since the ignition timing IGLOGCL#i is calculated as a limited value of the sum of the corrected ignition timing IGLOG#i and maximum pressure angle correction term IGSLD#i, the corrected ignition timing IGLOG#i is calculated as a value corrected by the maximum pressure angle correction term IGSLD#i such that the maximum pressure angle θPMAX#i converges to the target angle θPMAX_CMD#i.

Next, the aforementioned knock correction term calculation unit 43 will be described. This knock correction term calculation unit 43 calculates the knock correction term IGCRK#i on a cylinder-by-cylinder basis by an approach described below. In this connection, since the same calculation approach is employed for the knock correction term IGCRK#i in each cylinder, the fourth cylinder #4 is given as an example in the following description.

First, when the knock determination flag F_KNOCKIG# 4=0, a correction coefficient learning value KIGKN#4 is calculated by the following Equations (14), (15), and a knock correction term IGCRK#4 is calculated by the following Equations (16), (17). It should be understood that in this embodiment, the correction coefficient learning value KIGKN corresponds to a correction degree parameter.

$$KIGKM\#4(k)=KIGKM\#4(k-1)-DKIGKM \qquad \cdots\cdots (14)$$

$$KIGKN\#4(k)=R\cdot KIGKN\#4(k-1)+(1-R)\cdot KIGKM\#4(k) \qquad \cdots\cdots (15)$$

$$IGKNOCK\#4(k)=DIGKR(k)\cdot KIGKN\#4(k) \qquad \cdots\cdots (16)$$

$$IGCRK\#4(k)=DIGRSV(k)-IGKNOCK\#4(k) \qquad \cdots\cdots (17)$$

Here, KIGKM#4 in Equation (14) is a correction coefficient, and DKIGKM is a predetermined value (for example, the value of 0.1). Also, R in Equation (15) is a predetermined coefficient which is set to satisfy 0<R<1. On the other hand, IGKNOCK#4 in Equation (16) is a knock retard term, and DIGKR in Equation (16) is a retard value which is calculated by searching a map, not shown, in accordance with the engine rotational speed NE and intake pipe inner pressure PBA. Further, DIGRSV in Equation (17) is a knock margin which represents a maximum value of an angle by which the ignition timing can be advanced without causing knocking in an associated cylinder. This knock margin DIGRSV is calculated by searching a map, not shown, in accordance with the engine rotational speed NE and intake pipe inner pressure PBA.

As shown in the aforementioned Equations (14), (15), when F_KNOCKIG#4=0, the correction coefficient KIGKM#4 is calculated such that is decremented by a predetermined value DKIGKM, while the correction coefficient learning value KIGKN#4 is calculated as a value which is derived by applying first-order delay processing to such a correction coefficient KIGKM#4. In this event, lower limit processing is applied to the calculated value of the correction coefficient learning value KIGKN#4 for limiting the same to a lower limit value which is the value of zero. As a result, the correction coefficient learning value KIGKN#4 is calculated to gradually decrease toward the value of zero. Also, as shown in the aforementioned Equations (16), (17), the knock retard term IGKNOCK#4 is calculated as a product of the correction coefficient learning value KIGKN#4 and retard value DIGKR. As the knock correction term IGCRK#4 is calculated by subtracting the product from the knock margin DIGRSV, the correction coefficient learning value KIGKN#4 gradually decreases toward the value of zero, causing the knock correction term IGCRK#4 to gradually increase toward the knock margin DIGRSV. In other words, the knock correction term IGCRK#4 gradually changes on the advance side.

On the other hand, with F_KNOCKIG#4=1, when the following condition (h1) is satisfied, or when two conditions (h2), (h3) are both satisfied, or when three conditions (h4) - (h6) are all satisfied, correction coefficient learning values KIGKN#i are calculated for the six cylinders by the following Equations (18), (19). In other words, the correction coefficient learning values KIGKN#i for the six cylinders are updated. In this event, upper limit processing is applied to these calculated values to limit them to an upper limit value which is the value of one. Here, SNA_REFH is a predetermined strong knock determination value which is calculated by adding a positive predetermined value to the knock determination value SNA_REFL. It should be noted that in this embodiment, the strong knock determination value SNA_REFH corresponds to a second determination value.

(h1) SNA_S#4 $\geqq$ SNA_REFH
(h2) SNA_S#4<SNA_REFH
(h3) F_KNOCKIG#i=1 in the cylinders except for the fourth cylinder #4 during one pertinent combustion cycle.
(h4) SNA_S#4<SNA_REFH
(h5) F_KNOCKIG#i?1 in the cylinders except for the fourth cylinder #4 during the one pertinent combustion cycle.
(h6) The value of F_KNOCKIG#4 has changed from "0" to "1" before a predetermined time is elapsed from a time point at which the correction coefficient learning values KIGKN#i were calculated for the six cylinders.

$$KIGKM\#i(k)=KIGKM\#i(k-1)+DKIGKM \qquad \cdots\cdots (18)$$

$$KIGKN\#i(k)=R\cdot KIGKN\#i(k-1)+(1-R)\cdot KIGKM\#i(k) \qquad \cdots\cdots (19)$$

Here, KIGKM#i is a correction coefficient, and as shown in this Equation (19), the correction coefficient learning value KIGKN#i is calculated as a value which is derived by applying first-order delay processing to the correction coefficient KIGKM#i.

Further, with F_KNOCKIG#4=1, when both of the following conditions (h7), (h8) are satisfied, only the correction coefficient learning value KIGKN#4 is calculated by equations in which i=4 is substituted into the aforementioned Equations (18), (19).

(h7) F_KNOCKIG#i=0 in the cylinders except for the fourth cylinder #4 during the one pertinent combustion cycle.
(h8) The value of F_KNOCKIG#4 changes from "0" to "1" after a predetermined time has been elapsed from a time point at which the correction coefficient learning values KIGKN#i were calculated for the six cylinders.

Next, the knock retard term IGKNOCK#4 is calculated by the following Equation (20) which is the same as the aforementioned Equation (16):

$$IGKNOCK\#4(k) = DIGKR(k) \cdot KIGKN\#4(k) \quad \cdots\cdots (20)$$

Subsequently, the knock correction term IGCRK#4 is calculated by the following Equation (21) which is the same as the aforementioned Equation (17).

$$IGCRK\#4(k) = DIGRSV(k) - IGKNOCK\#4(k) \quad \cdots\cdots (21)$$

As shown in this Equation (21), the knock correction term IGCRK#4 is calculated by subtracting the knock retard term IGKNOCK#4 from the knock margin DIGRSV, so that when DIGRSV<IGKNOCK#4, the knock correction term IGCRK#4 takes a negative value. As shown in the aforementioned Equation (5), this knock correction term IGCRK#4 is added to the basic ignition timing IGMAP upon calculation of the corrected ignition timing IGLOG#4, so that when the knock correction term IGCRK#4 is negative, the corrected ignition timing IGLOG#4 is corrected toward the retarding side by the knock correction term IGCRK#4.

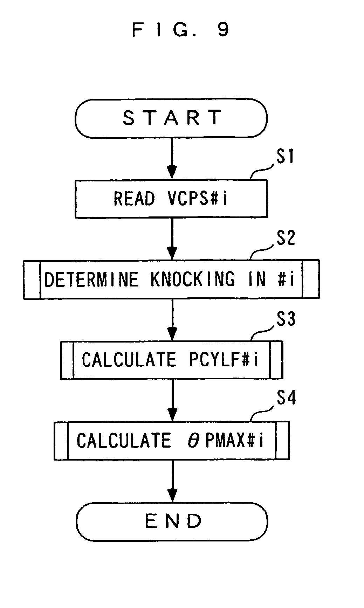

Next, control processing executed by the ECU 2 at the control period ΔTn mentioned above will be described with reference to Fig. 9. Assume herein that a variety of values calculated in the following description are stored in the RAM of the ECU 2. In this processing, detected voltages VCPS#i of the six cylinder inner pressure sensor 10 are read at step 1 (abbreviated as "S1" in the figures. The same is applied to the following description). Subsequently, the processing goes to step 2, where knock determination processing is executed for the six cylinders #i. Details on this processing will be described later.

Next, at step 3, cylinder inner pressures PCYLF#i are calculated for the six cylinders #i, respectively, by the same approach as the aforementioned cylinder inner pressure calculation unit 27.

At step 4 next to step 3, the maximum pressure angles θPMAX#i are calculated for the six cylinders #i by the same approach as the aforementioned maximum pressure angle calculation unit 28. Subsequently, this processing is terminated.

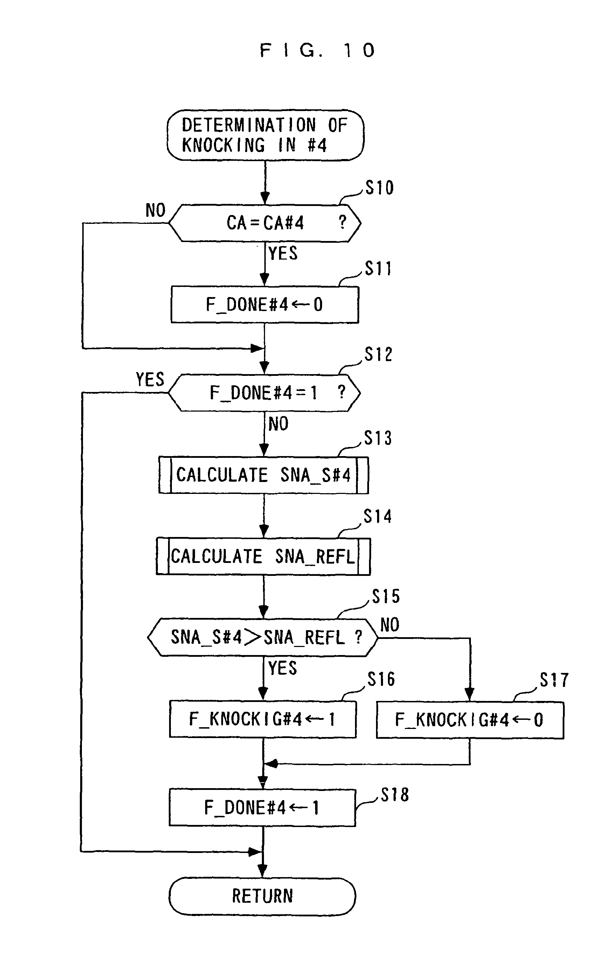

Next, the knock determination processing for the six cylinders #i at the aforementioned step 2 will be described with reference to Fig. 10. Since the same approach is employed for the knock determination processing in each of these six cylinders #i, the fourth cylinder #4 will be given as an example in the following description. As shown in Fig. 10, in this processing, it is first determined at step 10 whether or not the crank angle position CA reaches a predetermined position CA#4. This predetermined position CA#4 defines a position at which the execution of the knock determination is started for the fourth cylinder #4.

When the result of the determination at step 10 is YES, it is determined that the knock determination should be executed for the fourth cylinder #4, followed by a transition to step 11, where a knock determination done flag F_DONE#4 is set to "0" to indicate the determination. On the other hand, when the result of the determination at step 10 is NO, the processing goes to step 12.

At step 12 next to step 10 or 11, it is determined whether or not the knock determination done flag F_DONE#4 is "1." When the result of this determination is YES, i.e., when the knock determination has been terminated for the fourth cylinder #4, this processing is terminated without further actions. On the other hand, when the result of this determination is NO, the processing goes to step 13, where the knock intensity SNA_S#4 of the fourth cylinder #4 is calculated.

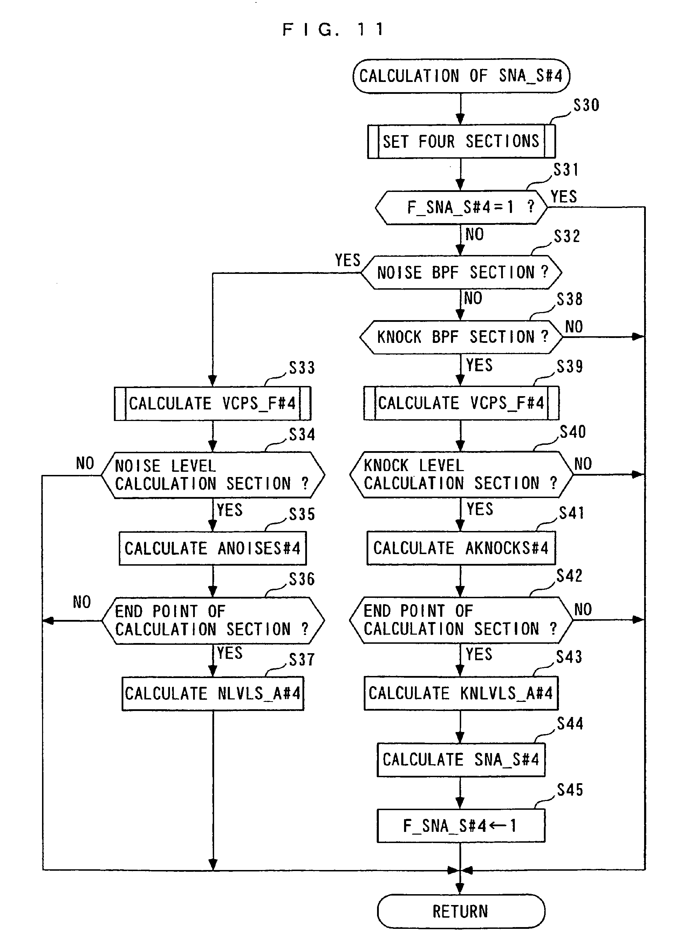

Specifically, the calculation of the knock intensity SNA_S#4 is executed as shown in Fig. 11. First, at step 30, four sections, i.e., a noise level calculation section, a noise BPF section, a knock level calculation section, and a knock BPF section are determined respectively in accordance with the engine rotational speed NE by the same approach as the aforementioned bandpass filtering unit 21.

Next, the processing goes to step 31, where it is determined whether or not a calculation done flag F_SNA_ S#4 is "1." When the result of this determination is YES, i.e., when the knock intensity SNA_S#4 has been calculated, this processing is terminated without further actions.

On the other hand, when the result of the determination at step 31 is NO, i.e., when the knock intensity SNA_ S#4 has not been calculated, the processing goes to step 32, where it is determined whether or not the crank angle position CA lies in the aforementioned noise BPF section. When the result of this determination is YES, the processing goes to step 33, where the filtered value VCPS_F#4 of the detected voltage is calculated.

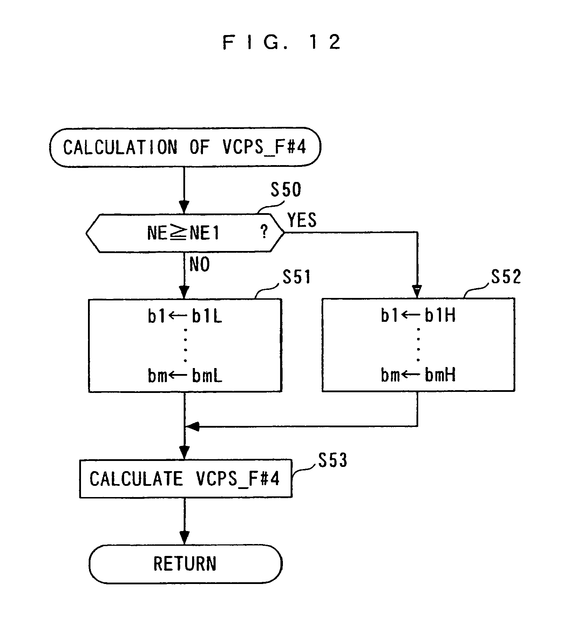

Specifically, this processing of calculating the filtered value VCPS_F#4 of the detected voltage is executed as shown in Fig. 12. As shown in Fig. 12, it is first determined at step 50 whether or not the engine rotational speed NE is equal to or higher than the aforementioned predetermined value NE1. When the result of this determination is NO, i.e., when the engine rotational speed NE is in the low rotation range, the filter coefficients b1 - bm are set to the values b1L - bmL for low rotations, respectively, at step 51.

On the other hand, when the result of the determination at step 50 is YES, i.e., when the engine rotational speed NE is in the high rotation range, the filter coefficients b1 - bm are set to the values b1H - bmH for high rotations, respectively, at step 52.

At step 53 next to step 51 or 52, the filtered value VCPS_F#4 of the detected voltage is calculated by the aforementioned Equation (1). Subsequently, this processing is terminated.

Turning back to Fig. 11, after calculating the filtered value VCPS_F#4 of the detected voltage in the foregoing manner at step 33, the processing goes to step 34, where it is determined whether or not the crank angle position CA is in the noise level calculation section. When the result of this determination is NO, this processing is terminated without further actions. On the other hand, when the result of this determination is YES, the processing goes to step 35, where the integrated value ANOISES#4 for noise level calculation is calculated by the aforementioned Equation (2).

At step 36 next to step 35, it is determined whether or not the crank angle position CA lies at the end point of the noise level calculation section. When the result of this determination is NO, this processing is terminated without further actions. On the other hand, when the result of this determination is YES, the processing goes to step 37, where the predetermined first-order delay filtering is applied to the integrated value ANOISES#4 for noise level calculation to calculate a noise level NLVLS_A#4. Subsequently, this processing is terminated.

On the other hand, when the result of the determination at step 32 is NO, i.e., when the crank angle position CA does not lie in the noise BPF section, the processing goes to step 38, where it is determined whether or not the crank angle position CA lies in the aforementioned knock BPF section. When the result of this determination is NO, this processing is terminated without further actions. On the other hand, when the result of this determination is YES, the processing goes to step 39, where the filtered value VCPS_F#4 of the detected voltage is calculated by the same approach as that used at the aforementioned step 33.

Next, the processing goes to step 40, where it is determined whether or not the crank angle position CA lies in the knock level calculation section. When the result of this determination is NO, this processing is terminated without further actions. On the other hand, when the result of this determination is YES, the processing goes to step 41, where the integrated value AKNOCKS#4 for knock level calculation is calculated by the aforementioned Equation (3).

At step 42 next to step 41, it is determined whether or not the crank angle position CA lies at the end point of the knock level calculation section. When the result of this determination is NO, this processing is terminated without further actions. On the other hand, when the result of this determination is YES, the processing goes to step 43 , where the predetermined upper limit processing is applied to the integrated value AKNOCKS#4 for knock level calculation to calculate the knock level KNLVLS_A#4, as previously described.

At step 44 next to step 43, the knock intensity SNA_S#4 is calculated by the aforementioned Equation (4), and for indicating this, the processing goes to step 45, where the calculation done flag F_SNA-S#4 is set to "1." Subsequently, this processing is terminated.

Turning back to Fig. 10, after calculating the knock intensity SNA_S#4 at step 13 in the foregoing manner, the processing goes to step 14, where the knock determination value SNA_REFL is calculated by the same approach as the aforementioned knock determination value calculation unit 25. Specifically, a map value for the knock determination value is calculated by searching a map in accordance with the engine rotational speed NE and intake pipe inner pressure PBA, and the calculated map value is corrected with a correction coefficient calculated in accordance with the engine water temperature TW to calculate the knock determination value SNA_REFL.

Next, the processing goes to step 15, where it is determined whether or not the knock intensity SNA_S#4 is larger than the knock determination value SNA_REFL. When the result of this determination is YES, it is determined that knocking equal to or larger than a predetermined intensity is occurring in the fourth cylinder #4, and the knock determination flag F_KNOCKIG#4 is set to "1" at step 16 in order to indicate that the knocking is occurring.

On the other hand, when the result of the determination at step 15 is NO, it is determined that knocking is not occurring in the fourth cylinder #4, and the knock determination flag F_KNOCKIG#4 is set to "0" at step 17 in order indicate that no knocking is occurring.

At step 18 subsequent to step 16 or 17, the knock determination done flag F_DONE#4 is set to "1" in order to indicate that the knock determination has been completed for the fourth cylinder #4, followed by termination of this processing.

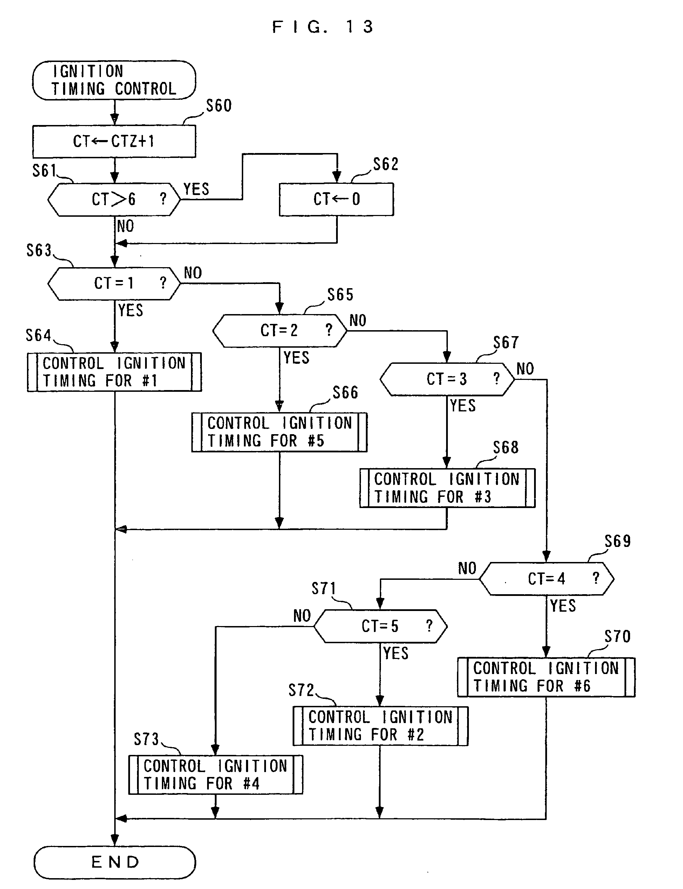

Next, the ignition timing control processing executed by the ECU 2 at the aforementioned control period ∆Tk will be described with reference to Fig. 13. In this processing, first, a counter value CT is set to the sum of its preceding value CTZ and the value of one at step 60. In other words, the counter value CT is incremented by one.

Next, it is determined at step 61 whether or not the counter value CT is larger than six. When the result of this determination is NO, the processing goes to step 63, later described. On the other hand, when the result of this determination is YES, the processing goes to step 62, where the counter value CT is reset to the value of zero, followed by the processing going to step 63.

At step 63 next to step 61 or 62, it is determined whether or not the counter value CT is equal to the value of one. When the result of this determination is YES, the processing goes to step 64, where the ignition timing control processing is executed for the first cylinder #1, followed by termination of this processing.

On the other hand, when the result of the determination at step 63 is NO, the processing goes to step 65, where it is determined whether or not the counter value CT is equal to the value of two. When the result of this determination is YES, the processing goes to step 66, where the ignition timing control processing is executed for the fifth cylinder #5, followed by termination of this processing.

On the other hand, when the result of the determination at step 65 is NO, the processing goes to step 67, where it is determined whether or not the counter value CT is equal to the value of three. When the result of this determination is YES, the processing goes to step 68, where the ignition timing control processing is executed for the third cylinder #3, followed by termination of this processing.

On the other hand, when the result of the determination at step 67 is NO, the processing goes to step 69, where it is determined whether or not the counter value CT is equal to the value of four. When the result of this determination is YES, the processing goes to step 70, where the ignition timing control processing is executed for the sixth cylinder #6, followed by termination of this processing.

On the other hand, when the result of the determination at step 69 is NO, the processing goes to step 71, where it is determined whether or not the counter value CT is equal to the value of five. When the result of this determination is YES, the processing goes to step 72, where the ignition timing control processing is executed for the second cylinder #2, followed by termination of this processing. On the other hand, when the result of the determination at step 71 is NO, the processing goes to step 73, where the ignition timing control processing is executed for the fourth cylinder #4, followed by termination of this processing.

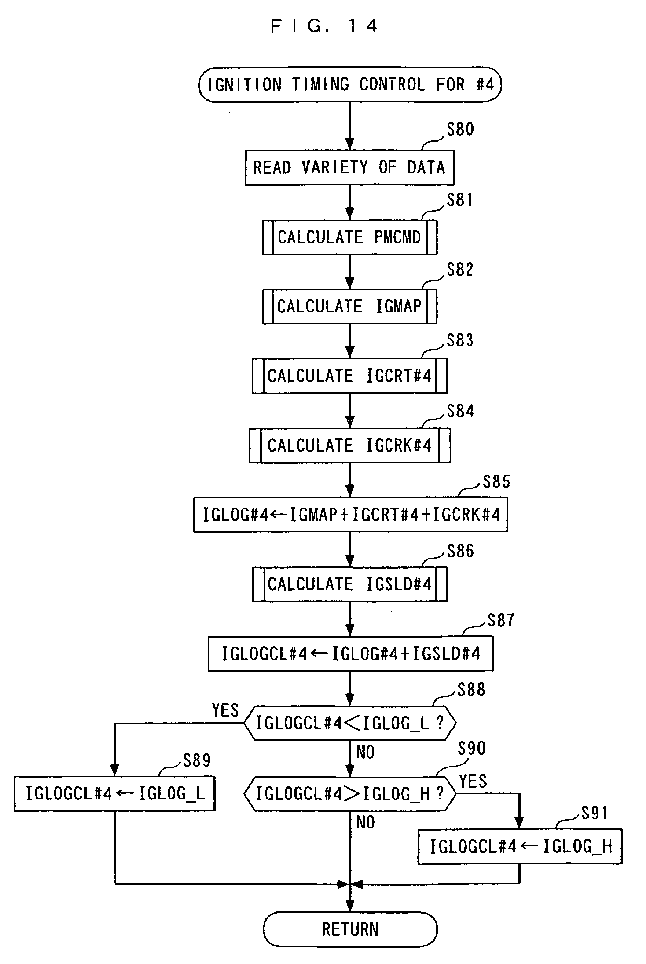

In the foregoing manner, the ignition timing control processing for the six cylinders #1 - #6 is executed in the order of #1 → #5 → #3 → #6 → #2 → #4. Since the same approach is employed in the ignition timing control processing for any cylinder, the ignition timing control for the fourth cylinder #4 at step 73 will be described below with reference to Fig. 14.

As shown in Fig. 14, in this processing, first, a variety of data stored in the RAM are read at step 80, including the knock determination flag F_KNOCKIG#i, knock intensity SNA_S#i, maximum pressure angle θPMAX#i and the like.

Next, at step 81, after calculating a required torque PMCMD at step 81 by the same approach as the aforementioned basic ignition timing calculation unit 41, the basic ignition timing IGMAP is calculated at step 82 by the same approach as the basic ignition timing calculation unit 41.

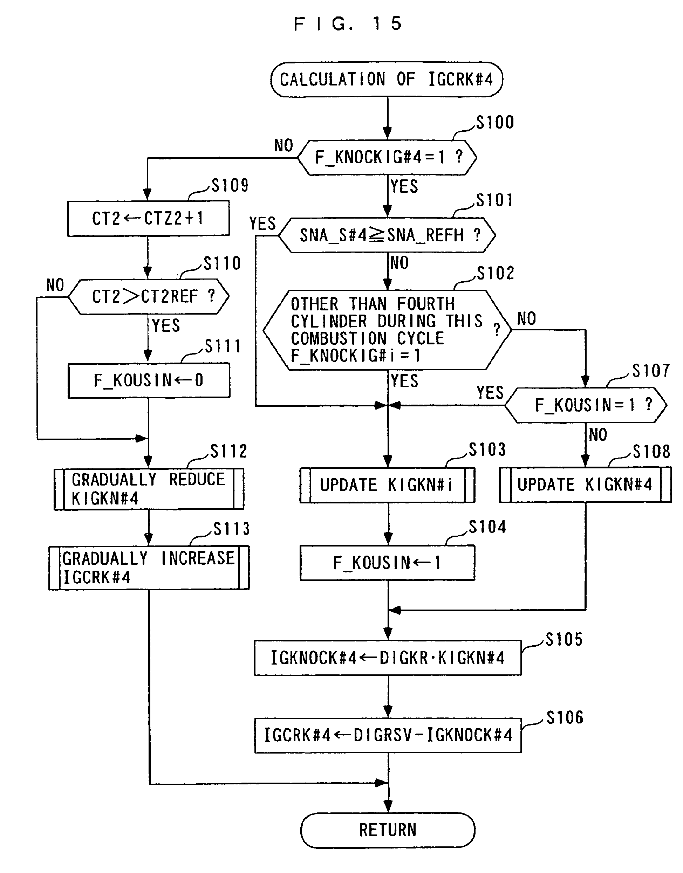

At step 83 next to step 82, the correction term IGCRT#i is calculated by the same approach as the aforementioned correction term calculation unit 42. Next, the processing goes to step 84, where the knock correction term IGCRK#4 is calculated by an approach shown in Fig. 15, similar to the aforementioned knock correction term calculation unit 43.

As illustrated in Fig. 15, it is first determined at step 100 whether or not the knock determination flag F_ KNOCKIG#4 is "1." When the result of this determination is YES, i.e., when knocking is occurring in the fourth cylinder #4, the processing goes to step 101, where it is determined whether or not the knock intensity SNA_S#4 is equal to or larger than a predetermined strong knock determination value SNA_REFH. This strong knock determination value SNA_ REFH is adapted to determine whether or not strong knocking is occurring in an associated cylinder, and is calculated by adding a predetermined value to the aforementioned knock determination value SNA_REFL.

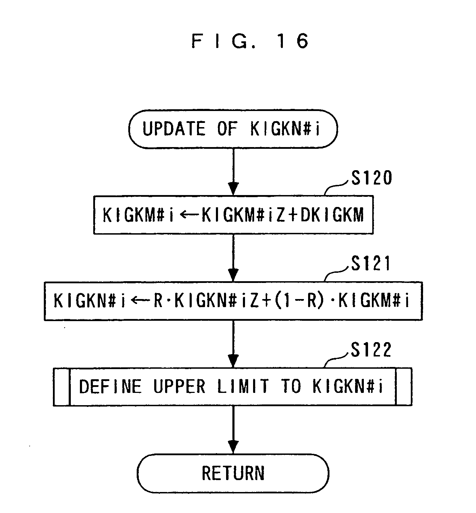

When the result of the determination at step 101 is YES, it is determined that strong knocking is occurring in the fourth cylinder #4, followed by a transition to step 103, where the correction coefficient learning values KIGKN#i for the six cylinders are updated. Specifically, this update processing is performed as shown in Fig. 16.

First, at step 120, the sum of the preceding value KIGKM#iZ of the correction coefficient and a predetermined addition term DKIGKM is set as the correction coefficient KIGKM#i. In other words, the correction coefficients KIGKM#i for the six cylinders are calculated.

Next, the flow goes to step 121, where the product of a value (1-R) and correction coefficient KIGKM#i is added to the product of a predetermined coefficient R and the preceding value KIGKN#iZ of the correction coefficient learning value, and the resulting sum is set as the correction coefficient learning value KIGKN#i. In other words, the correction coefficient learning values KIGKN#i for the six cylinders are updated.

Next, at step 122, the aforementioned upper limit processing is applied to the learning values KIGKN#i for the six cylinders calculated at step 121 to calculate the correction coefficient learning values KIGKN#i. Subsequently, this processing is terminated.

Turning back to Fig. 15, after the learning values KIGKN#i have been updated at step 103 in the foregoing manner, the processing goes to step 104, where an update flag F_KOUSIN is set to "1" in order to indicate that the learning values KIGKN#i have been updated.

Next, the processing goes to step 105, where the knock retard term IGKNOCK#4 is set to the product DIGKR·KIGKN#4 of the retard value and correction coefficient learning value. Next, at step 106, the knock correction term IGCRK#4 is set to a deviation DIGRSV-IGKNOCK#4 of the knock margin from the knock retard term, followed by termination of this processing.

On the other hand, when the result of the determination at step 101 is NO, i.e., when weak knocking is occurring in the fourth cylinder #4, the flow goes to step 102, where it is determined whether or not the knock determination flag F_KNOCKIG#1=1 is established in any cylinder other than the fourth cylinder in this combustion cycle.

When the result of this determination is YES, steps 103 - 106 are executed as described above, followed by termination of this processing, on the assumption that poor properties of the fuel makes each cylinder more susceptible to knocking.

On the other hand, when the result of the determination at step 102 is NO, it is determined whether or not the aforementioned update flag F_KOUSIN is "1." When the result of this determination is YES, steps 103 - 106 are executed as described above, followed by termination of this processing, on the assumption that poor properties of the fuel makes each cylinder more susceptible to knocking.

On the other hand, when the result of the determination at step 107 is NO, i.e., when F_KOUSIN=0, the processing goes to step 108, where the correction coefficient learning value KIGKN#4 for the fourth cylinder #4 is updated. This processing is executed at the aforementioned steps 120 - 122 in Fig. 16 by calculating the value for the fourth cylinder #4 alone. Subsequently, steps 105, 106 are executed as described above, followed by termination of this processing.

On the other hand, when the result of the determination at the aforementioned step 100 is NO, i.e., when knocking is not occurring in the fourth cylinder #4, the processing goes to step 109, where the counter value CT2 is set to the sum of its preceding value CT2Z and the value of one. In other words, the counter value CT2 is incremented by one.

Next, it is determined at step 110 whether or not the counter value CT2 is larger than a predetermined value CT2REF. When the result of this determination is YES, i.e., when knocking is not occurring in the fourth cylinder while a time corresponding to the predetermined value CT2REF is elapsed, the update flag F_KOUSIN is reset to "0" at step 111, followed by a transition to step 112, later described.

On the other hand, when the result of the determination at step 110 is NO, the processing goes to step 112. At step 112 next to step 110 or 111, the correction coefficient learning value KIGKN#4 is gradually reduced. Specifically, the correction coefficient learning value KIGKN#4 is calculated by the aforementioned Equations (14), (15), and lower limit processing is applied to the calculated value to limit the same to a lower limit value which is the value of zero. As a result, the correction coefficient learning value KIGKN#4 is calculated to gradually decrease toward the value of zero, as previously described.

Next, the processing goes to step 113, where the knock correction term IGCRK#4 is gradually increased. Specifically, the knock correction term IGCRK#4 is calculated by the aforementioned Equations (16), (17). As a result, the knock correction term IGCRK#4 is calculated to gradually increase toward the knock margin DIGRSV, as previously described. After executing step 113 in the foregoing manner, this processing is terminated.

Turning back to Fig. 14, after the knock correction term IGCRK#4 has been calculated at step 84 in the foregoing manner, the processing goes to step 85, where the corrected ignition timing IGLOG#4 is set to the sum of the basic ignition timing IGMAP, correction term IGCRT#4, and knock correction term IGCRK#4.

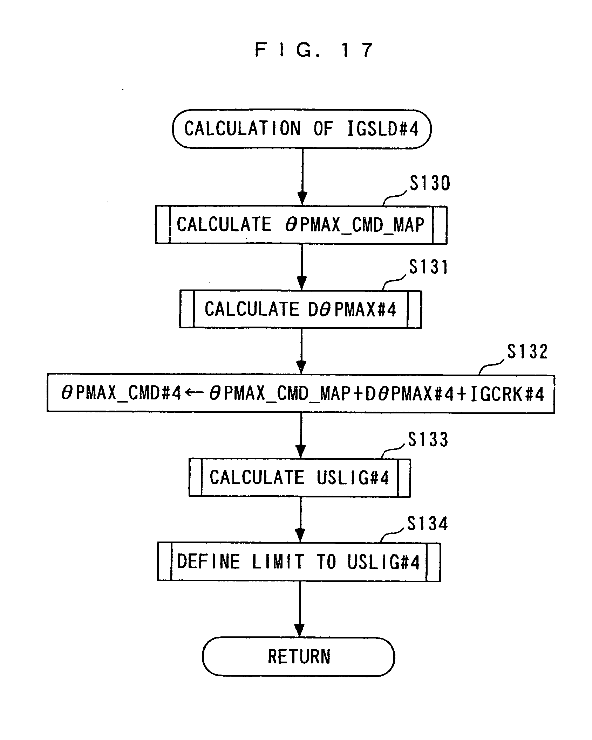

Next, a maximum pressure angle correction term IGSLD#4 is calculated at step 86. Specifically, this processing is executed as shown in Fig. 17.

First, at step 130, a basic target angle θPMAX_CMD_MAP is calculated by searching the map shown in Fig. 7 in accordance with the engine rotational speed NE and intake pipe inner pressure PBA in the manner described above. Then, at step 131, an IMEP correction value DθPMAX#4 is calculated in accordance with the maximum pressure angle θPMAX#4 and the like in the manner described above.

Next, at step 132, a target angle θPMAX_CMD#4 is set to the sum of the basic target angle θPMAX_CMD_ MAP, IMEP correction value DθPMAX#4, and knock correction term IGCRK#4. At step 133 next to step 132, a control input USLIG#4 is calculated in accordance with the sliding mode control algorithm of the aforementioned Equations (7) - (11). Next, the processing goes to step 134, where predetermined limit processing is applied to the control input USLIG#4 to calculate a maximum pressure angle correction term IGSLD#4, followed by termination of this processing.

Turning back to Fig. 14, after the maximum pressure angle correction term IGSLD#4 has been calculated at step 86 in the foregoing manner, the processing goes to step 87, where an ignition timing IGLOGCL#4 is set to the sum of the corrected ignition timing IGLOG#4 and maximum pressure angle correction term IGSLD#4. Subsequently, limit processing is applied to the ignition timing IGLOGCL#4 at the following steps 88 - 91.

Specifically, it is determined at step 88 whether or not the ignition timing IGLOGCL#4 calculated at step 87 is smaller than a predetermined lower limit threshold value IGLOG_L. When the result of this determination is YES, i.e., when the ignition timing IGLOGCL#4 presents a value retarded from the lower limit threshold value IGLOG_L, the ignition timing IGLOGCL#4 is set to the lower limit threshold value IGLOG_L at step 89, followed by termination of this processing.

On the other hand, when the result of the determination at step 88 is NO, the processing goes to step 90, where it is determined whether or not the ignition timing IGLOGCL#4 is larger than a predetermined upper limit threshold value IGLOG_H. When the result of this determination is YES, i.e., when the ignition timing IGLOGCL#4 presents a value advanced from the upper limit threshold value IGLOG_H, the ignition timing IGLOGCL#4 is set to the upper limit threshold value IGLOG_H, followed by termination of this processing.

On the other hand, when the result of the determination at step 90 is NO, i.e., when IGLOG_L≦ IGLOGCL#4≦IGLOG_H, this processing is terminated without further actions. In other words, the value calculated at step 87 is used as the ignition timing IGLOGCL#4.

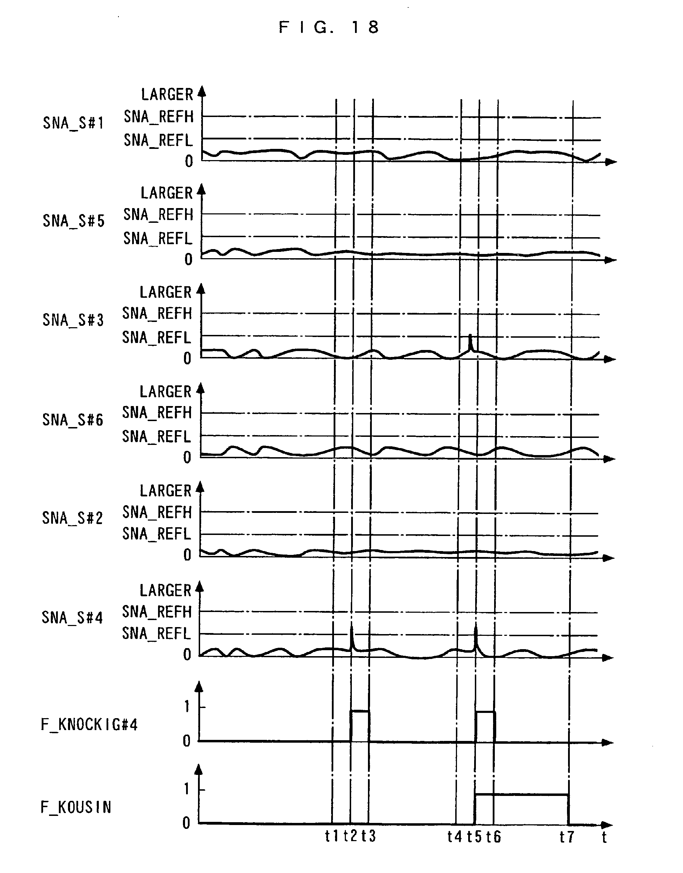

Next, a description will be given of exemplary operations when knocking occurs in the fourth cylinder #4 during the execution of the ignition timing control processing as described above. As shown in Fig. 18, when relatively weak knocking occurs in the fourth cylinder #4 at time t2 during the ignition timing control, SNA_REFL<SNA_S#4 is established, causing the result of the determination at step 15 in Fig. 10 to be YES. Accordingly, the knock determination flag F_KNOCKIG#4 is set to "1" at step 16. This causes the result of the determination at step 100 in Fig. 15 to be YES, and the result of the determination at step 101 to be NO due to the establishment of SNA_S#4<SNA_REFH.

Further, since knocking is not occurring in the cylinders other than the fourth cylinder #4 during a period between times t1 and t2, which corresponds to one combustion cycle, the result of he determination at step 102 is NO. Since knocking has not occurred in all the cylinders #1 - #6 for a long period, F_KOUSIN=0 is established, causing the result of the determination at step 107 to be NO. As a result, the correction coefficient learning value KIGKN#4 for the fourth cylinder #4 alone is updated at step 108. Then, at time t3 after one combustion cycle, knocking does not occur in the fourth cylinder #4, causing the knock determination flag F_KNOCKIG#4 to be reset to "0."

On the other hand, when relatively weak knocking occurs at time t5 in the fourth cylinder #4, the knock determination flag F_KNOCKIG#4 is set to "1." Also, since knocking occurs in the third cylinder #3 during a period between times t4 and t5 which corresponds to one combustion cycle, the result of the determination at step 102 is YES. As a result, the correction coefficient learning values KIGKN#i for the six cylinders are updated at step 103, and the update flag F_KOUSIN is set to "1."

Then, at time t4 after one combustion cycle, knocking does not occur in the fourth cylinder #4, causing the knock determination flag F_KNOCKIG#4 to be reset to "0." Further, when knocking does not continuously occur in the fourth cylinder #4 for more than a period corresponding to a predetermined value CTREF2 after time t3 (time t7), the update flag F_KOUSIN is reset to "0."

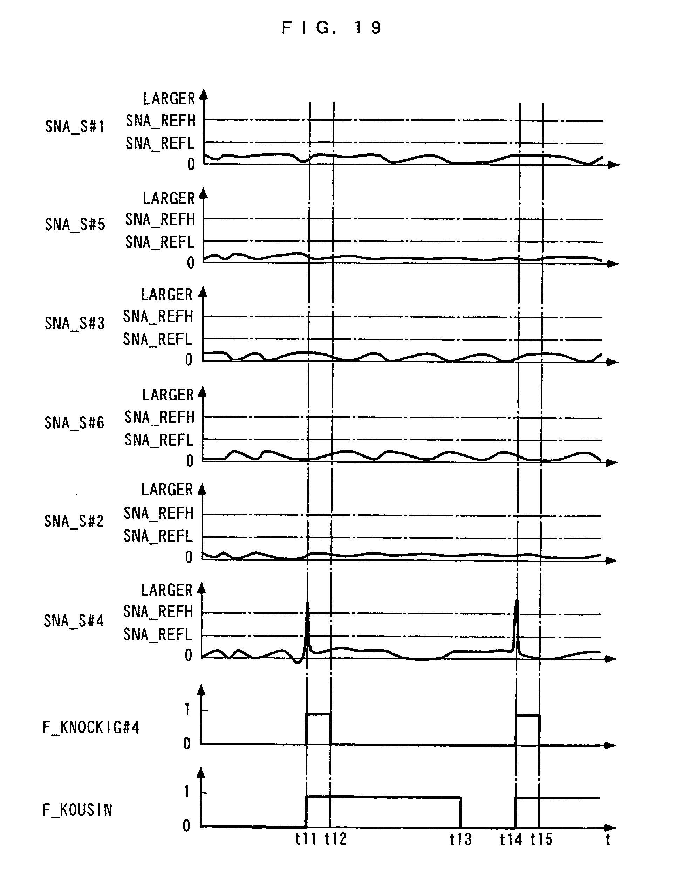

On the other hand, when strong knocking occurs in the fourth cylinder #4 at time t11 during the ignition timing control as shown in Fig. 19, SNA_REFH≦SNA_S#4 is established, causing the knock determination flag F_KNOCKIG#4 to be set to "1." Also, since the result of the determination at step 101 in Fig. 15 is YES, the correction coefficient learning values KIGKN#i for the six cylinders are updated at step 103, causing the update flag F_KOUSIN to be set to "1" at step 104.

Then, at time t12 after one combustion cycle, knocking does not occur in the fourth cylinder #4, causing the knock determination flag F_KNOCKIG#4 to be reset to "0." Further, when knocking does not continuously occur in the fourth cylinder #4 for a period corresponding to the predetermined value CTREF2 after time t12 (time t13), the update flag F_KOUSIN is reset to "0."

Further, when strong knocking occurs in the fourth cylinder #4 at time t14, the knock determination flag F_KNOCKIG#4 is set to "1" and the correction coefficient learning values KIGKN#i for the six cylinders are updated, causing the update flag F_KOUSIN to be set to "1," as previously described. Then, since knocking does not occur in the fourth cylinder #4 at time t15 after one combustion cycle, the knock determination flag F-KNOCKIG#4 is rest to "0."

In the foregoing manner, according to the ignition timing control apparatus 1 for an internal combustion engine of this embodiment, when relatively weak knocking occurs in one of the six cylinders #1 - #6, for example, in the fourth cylinder #4 to establish SNA_REFL<SNA_S#4<SNA_REFH, the correction coefficient learning value KIGKN#4 for the fourth cylinder #4 alone is updated. On the other hand, when strong knocking occurs in the fourth cylinder #4 to establish SNA_REFH ≦SNA_S#4, the correction coefficient learning values KIGKN for the six cylinders are updated. In this way, the knock retard term IGKNOCK is set to a larger value in all the cylinders to increase the degree of a correction toward the retarding side by the knock correction term IGCRK, so that the ignition timings IGLOGCL for all the cylinders are corrected more to the retarding side. Therefore, the ignition timings IGLOGCL for all the cylinders can be collectively corrected toward the retarding side, for example, when a fuel exhibits poor properties and a low octane number, thus making it possible to more rapidly and effectively restrain knocking from occurring as the overall engine 3. As a result, the lifetime of the engine 3 can be extended.

Also, the cylinder inner pressure PCYLF is calculated based on the voltage VCPS of the detected signal of the cylinder inner pressure sensor 10, and the absolute value |VCPS_F| of a value derived by applying predetermined bandpass filtering to the cylinder inner pressure PCYLF is integrated in the noise level calculation section and knock level calculation section, thereby calculating the integrated value ANOISES for noise level calculation and the integrated value AKNOCKS for knock level calculation. Also, the knock intensity SNA_S for use in knock determination is calculated based on these values ANOISES, AKNOCKS. In this bandpass filtering, the pass frequency FRQ is set to the predetermined first frequency FRQ1 when NE<NE1, and set to the predetermined second frequency FRQ2 (>FRQ1) when $NE \geqq NE1$, so that data indicative only of the knocking intensity can be effectively extracted from the detected voltage VCPS to improve the S/N ratio of the filtered value VCPS_F of the detected voltage, as shown in the experiment result in Fig. 3.

In addition, in the bandpass filtering, the calculations of the two integrated values ANOISES, AKNOCKS are started at a time point at which initial noise in the filtered value VCPS_F has converged immediately after the start of the calculation in both the noise BPF section and knock BPF section, thus making it possible to improve the calculation accuracy for these integrated values ANOISES, AKNOCKS. In the foregoing manner, the knock intensity SNA_S can be calculated with a higher accuracy; and as a result, knocking can be more effectively restrained.

Also, the maximum pressure angle correction term IGSLD is calculated by the sliding mode control algorithm such that the maximum pressure angle θPMAX reaches the target angle θPMAX__CMD, and the ignition timing IGLOGCL is calculated as the sum of the maximum pressure angle correction term IGSLD and corrected ignition timing IGLOG. In the calculation of the target angle θPMAX_CMD, since the knock correction term IGCRK is used as an addition term, the target angle θPMAX_CMD is calculated as a more retarded value when SNA_REFL<SNA_S as compared with when SNA_S≦SNA_REFL, thereby causing the maximum pressure angle correction term IGSLD to be calculated as a more retarded value as well.

On the other hand, in the calculation of the corrected ignition timing IGLOG; since the knock correction term IGCRK is used as an addition term as well, the ignition timing IGLOGCL is calculated as a value retarded from the corrected ignition timing IGLOG when SNA_REFL<SNA_S as compared with when SNA_S≦SNA_REFL is established. In the foregoing manner, since the direction in which the ignition timing IGLOGCL is corrected by the knock correction term IGCRK can be matched with the direction in which the ignition timing IGLOGCL is corrected by the maximum pressure angle correction term IGSLD, a knocking restraining effect can be ensured while avoiding the correction of the ignition timing IGLOGCL by the knock correction term IGCRK from interfering with the feedback control of the maximum pressure angel θPMAX to the target angle θPMAX_CMD by the maximum pressure angle correction term IGSLD.

While the foregoing embodiment has shown an example in which the knock intensity SNA_S is calculated as a knock intensity parameter, the knock intensity parameter of the present invention is not so limited, and any value may be used as long as it indicates the intensity of knocking.

Also, while the foregoing embodiment has shown an example in which the correction coefficient learning value KIGKN is calculated as a correction degree parameter, the correction degree parameter of the present invention is not so limited, but any value may be used as long as it indicates a degree to which the ignition timing should be corrected toward the retarding side. For example, the correction coefficient KIGKM may be calculated as a correction degree parameter, and the knock correction term IGCRK may be calculated in accordance with the calculated correction coefficient KIGKM. Also, the knock correction term IGCRK may be calculated as a correction degree parameter.

Further, while the foregoing embodiment has shown an example in which the cylinder inner pressure sensor 10 and ECU 2 are used as cylinder inner pressure parameter detecting means, the cylinder inner pressure detecting means of the present invention is not so limited, but any device may be used as long as it detects a cylinder inner pressure parameter indicative of the cylinder inner pressure.

Also, while the foregoing embodiment has shown an example in which the detected voltage VCPS is used as a cylinder inner pressure parameter, the cylinder inner pressure parameter of the present invention is not so limited, but any value may be used as long as it indicates the cylinder inner pressure.

Further, while the foregoing embodiment has shown an example in which the sliding mode control algorithm of Equations (7) - (12) is used as a predetermined feedback control algorithm, the predetermined feedback control algorithm of the present invention is not so limited, but any algorithm may be used as long as it can calculate the maximum pressure angle correction term IGSLD for correcting the ignition timing IGLOGCL such that the maximum pressure angle θPMAX reaches the target angle θPMAX_CMD. For example, a PID control algorithm or the like may be used as the predetermined feedback control algorithm to calculate the maximum pressure angle correction term IGSLD.

Also, while the foregoing embodiment has shown an example in which the integrated value ANOISES for noise level calculation and the integrated value AKNOCKS for knock level calculation are used as the first and second parameters, the first and second parameters are not so limited, but any values may be used as long as the knock intensity parameter can be calculated in accordance with these two parameters.

An ignition timing control apparatus and method for an internal combustion engine, and an engine control unit are provided for more rapidly and effectively restraining knocking as the entire internal combustion engine, and extending the lifetime of the internal combustion engine. The ignition timing control apparatus comprising an ECU. The ECU determines a basic ignition timing on a cylinder-by-cylinder basis, calculates a knock intensity on a cylinder-by-cylinder bases based on a detected signal of a cylinder inner pressure sensor, and updates a correction coefficient learning value for a corresponding cylinder when the knock intensity is larger than a predetermined first determination value and is smaller than a predetermined second determination value larger than the predetermined first determination value, and updates the knock intensities for all the cylinders when the one knock intensity parameter is equal to or larger than the predetermined second determination value. Then, the ECU calculates a knock correction term on a cylinder-by-cylinder basis in accordance with the correction coefficient learning value, and corrects the basic ignition timing with the knock correction term, thereby determining an ignition timing on a cylinder-by-cylinder basis.

**Claims**

1.   An ignition timing control apparatus for an internal combustion engine (3), comprising:

ignition timing determining means (40) for determining ignition timings (IGLOGCL#i) for a plurality of cylinders of said internal combustion engine on a cylinder-by-cylinder basis;
knock intensity parameter detecting means (10, 20) for detecting a knock intensity parameter (SNA_S) indicative of the intensity of knocking on a cylinder-by-cylinder basis;
wherein said knock intensity parameter detecting means (10, 20) comprises: cylinder inner pressure parameter detecting means for detecting a cylinder inner pressure parameter (VCPS) indicative of a cylinder inner pressure (PCYL) on a cylinder-by-cylinder basis; engine rotational speed detecting means (13) for detecting the rotational speed (NE) of said internal combustion engine as an engine rotational speed (NE); and knock intensity parameter calculating means (24) for calculating the knock intensity parameter (SNA_S) based on a filtered value derived by applying predetermined bandpass filtering (in 21) to the cylinder inner pressure parameter (PCS), and setting a pass band of the predetermined bandpass filtering in accordance with the detected engine rotational speed (NE);
correction degree parameter calculating means (43) for calculating a correction degree parameter (KIGKN) indicative of a degree to which the ignition timing should be corrected toward a retarding side in accordance with the detected knock intensity parameter (SNA_S) on a cylinder-by-cylinder basis; and
first correcting means (2) for correcting the ignition timing toward the retarding side on a cylinder-by-cylinder basis in accordance with the calculated correction degree parameter (KIGKN),
wherein said correction degree parameter calculating means (43) calculates the correction degree parameter (KIGKN) only for one cylinder on a cylinder-by-cylinder basis corresponding to one of the knock intensity parameters (SNA_S) when the one knock intensity parameter (SNA_S) is larger than a first determination value (SNA_REFL) and is smaller than a second determination value (SNA_REFH) larger than the first determination value (SNA_REFL), and calculates the correction degree parameter (KIGKN) collectively for all the cylinders when the one knock intensity parameter (SNA_S) is equal to or larger than the second determination value (SNA_REFH),
wherein the first determination value (SNA_REFL) is calculated by searching a map value in accordance with the engine rotational speed (NE) and intake pipe inner pressure (PBA) and correcting the calculated map value with a correction coefficient calculated in accordance with the engine water temperature (TW), and
the second determination value (SNA_REFH) is calculated by adding a positive predetermined value to the first determination value (SNA_REFL),

further comprising:

maximum pressure angle detecting means (28) for detecting a crank angle position (ϴPMAX) at which the cylinder inner pressure (PCYL) presents a maximum value in the combustion cycle as a maximum pressure angle on a cylinder-by-cylinder basis based on the cylinder inner pressure parameter (VCPS);
target angle setting means (2) for setting a target angle to which the maximum pressure angle is targeted on a cylinder-by-cylinder basis; and
second correcting means for correcting the ignition timing on a cylinder-by-cylinder basis using a predetermined feedback control algorithm such that the maximum pressure angle (ϴPMAX) reaches the target angle,
wherein said correction degree parameter calculating means (43) calculates the correction degree parameter (KIGKN) for the one cylinder corresponding to the one knock intensity parameter (SNA_S) to be a larger value of the degree to which the ignition timing is corrected toward the retarding side when the one knock intensity parameter (SNA_S) is larger than the first determination value (SNA_REFL) than when the one knock intensity parameter (SNA_S) is equal to or smaller than the first determination value (SNA_REFL), and said target angle setting means (2) sets the target angle for the one cylinder to a more retarding side when the one knock intensity parameter (SNA_S) is larger than the first determination value (SNA_REFL) than when the one knock intensity parameter is equal to or smaller than the first determination value (SNA_REFL).

2. An ignition timing control apparatus for an internal combustion engine according to claim 1, wherein said knock intensity parameter calculating means (24) sets the pass band of said predetermined bandpass filtering (in 21) to a predetermined first frequency band when the engine rotational speed (NE) is lower than a predetermined rotational speed, and to a predetermined second frequency band higher than the predetermined first frequency band when the engine rotational speed (NE) is equal to or higher than the predetermined rotational speed.

3. An ignition timing control apparatus for an internal combustion engine according to claim 1 or 2, wherein said knock intensity parameter calculating means (24) comprises:

first parameter calculating means (22) for calculating the filtered value by applying the predetermined bandpass filtering to the cylinder inner pressure parameter (VCPS) detected in a predetermined crank angle section during a compression stroke, and calculating a first parameter (ANOISES) for use in calculating the knock intensity parameter (SNA_S) based on the filtered value;
second parameter calculating means (23) for calculating the filtered value by applying the predetermined bandpass filtering to the cylinder inner pressure parameter (VCPS) detected in a predetermined crank angle section during an expansion stroke, and calculating a second parameter (AKNOCKS) for use in calculating the knock intensity parameter (SNA_S) based on the filtered value; and
parameter calculating means for calculating the knock intensity parameter (SNA_S) in accordance with the calculated first parameter (ANOISES) and the calculated second parameter (AKNOCKS),
wherein said first parameter calculating means (22) starts an operation of the predetermined bandpass filtering at a timing earlier than the start of the calculation of the first parameter (ANOISES), and
said second parameter calculating means (23) starts the operation of the predetermined bandpass filtering at a timing earlier than the start of the calculation of the second parameter (AKNOCKS).

4. An ignition timing control method for an internal combustion engine (3), comprising the steps of:

determining ignition timings (IGLOGCL#i) for a plurality of cylinders of said internal combustion engine on a cylinder-by-cylinder basis;
detecting a knock intensity parameter (SNA_S) indicative of the intensity of knocking on a cylinder-by-cylinder basis;
wherein said step of detecting a knock intensity parameter includes: detecting a cylinder inner pressure parameter (VCPS) indicative of a cylinder inner pressure on a cylinder-by-cylinder basis; detecting the rotational speed of said internal combustion engine as an engine rotational speed (NE); and calculating the knock intensity parameter (SNA_S) based on a filtered value derived by applying predetermined bandpass filtering to the cylinder inner pressure parameter (VCPS), and setting a pass band of the predetermined bandpass filtering in accordance with the detected engine rotational speed (NE);
calculating a correction degree parameter (KIGKN) indicative of a degree to which the ignition timing should be corrected toward a retarding side in accordance with the detected knock intensity parameter (SNA_S) on a cylinder-by-cylinder basis; and
correcting the ignition timing toward the retarding side on a cylinder-by-cylinder basis in accordance with the calculated correction degree parameter (KIGKN),
wherein said step of correcting a correction degree parameter includes calculating the correction degree parameter (KIGKN) only for one cylinder on a cylinder-by-cylinder basis corresponding to one of the knock intensity parameters (SNA_S) when the one knock intensity parameter (SNA_S) is larger than a first determination value (SNA_REFL) and is smaller than a second determination value (SNA_REFH) larger than the first determination value (SNA_REFL), and calculating the correction degree parameter (KIGKN) collectively for all the cylinders when the one knock intensity parameter (SNA_S) is equal to or larger than the second determination value (SNA_REFH),
wherein the first determination value (SNA_REFL) is calculated by searching a map value in accordance with the engine rotational speed (NE) and intake pipe inner pressure (PBA) and correcting the calculated map value with a correction coefficient calculated in accordance with the engine water temperature (TW), and

the second determination value (SNA_REFH) is calculated by adding a positive predetermined value to the first determination value (SNA_REFL);

further comprising the steps of:

detecting a crank angle position (ΘPMAX) at which the cylinder inner pressure (PCYL) presents a maximum value in the combustion cycle as a maximum pressure angle on a cylinder-by-cylinder basis based on the cylinder inner pressure parameter (VCPS#i);

setting a target angle to which the maximum pressure angle is targeted on a cylinder-by-cylinder basis; and correcting the ignition timing on a cylinder-by-cylinder basis using a predetermined feedback control algorithm such that the maximum pressure angle (ΘPMAX) reaches the target angle,

wherein said step of calculating a correction degree parameter (KIGKN) includes calculating the correction degree parameter for the one cylinder corresponding to the one knock intensity parameter (SNA_S) to be a larger value of the degree to which the ignition timing is corrected toward the retarding side when the one knock intensity parameter (SNA_S) is larger than the first determination value (SNA_REFL) than when the one knock intensity parameter is equal to or smaller than the first determination value (SNA_REFL), and

said step of setting a target angle includes setting the target angle for the one cylinder to a more retarding side when the one knock intensity parameter (SNA_S) is larger than the first determination value (SNA_REFL) than when the one knock intensity parameter is equal to or smaller than the first determination value (SNA_REFL).

5. An ignition timing control method for an internal combustion engine according to claim 4, wherein said step of calculating a knock intensity parameter includes setting the pass band of said predetermined bandpass filtering to a predetermined first frequency band when the engine rotational speed (NE) is lower than a predetermined rotational speed, and to a predetermined second frequency band higher than the predetermined first frequency band when the engine rotational speed (NE) is equal to or higher than the predetermined rotational speed.

6. An ignition timing control method for an internal combustion engine according to claim 7 or 8, wherein said step of calculating a knock intensity parameter (SNA_S) includes:

calculating the filtered value by applying the predetermined bandpass filtering to the cylinder inner pressure parameter (VCPS) detected in a predetermined crank angle section during a compression stroke, and calculating a first parameter (ANOISES) for use in calculating the knock intensity parameter (SNA_S) based on the filtered value;

calculating the filtered value by applying the predetermined bandpass filtering to the cylinder inner pressure parameter (VCPS) detected in a predetermined crank angle section during an expansion stroke, and calculating a second parameter (AKNOCKS) for use in calculating the knock intensity parameter (SNA_S) based on the filtered value; and

calculating the knock intensity parameter (SNA_S) in accordance with the calculated first parameter (ANOISES) and the calculated second parameter (AKNOCKS),

wherein said step of calculating a first parameter includes starting an operation of the predetermined bandpass filtering at a timing earlier than the start of the calculation of the first parameter (ANOISES), and

said step of calculating a second parameter (AKNOCKS) includes starting the operation of the predetermined bandpass filtering at a timing earlier than the start of the calculation of the second parameter (AKNOCKS).

**Patentansprüche**

1. Zündzeitpunktsteuervorrichtung für einen Verbrennungsmotor (3), umfassend:

ein Zündzeitpunktbestimmungsmittel (40) zum Bestimmen von Zündzeitpunkten (IGLOGCL#i) für eine Mehrzahl von Zylindern in dem Verbrennungsmotor auf zylinderweiser Basis;

ein Klopfintensitätsparametererfassungsmittel (10, 20) zum Erfassen eines die Intensität von Klopfen indizierenden Klopfintensitätsparameters (SNA_S) auf zylinderweiser Basis;

worin das Klopfintensitätsparametererfassungsmittel (10, 20) umfasst: ein Zylinderinnendruckparametererfassungsmittel zum Erfassen eines einen Zylinderinnendruck (PCYL) indizierenden Zylinderinnendruckparameters (VCPS) auf zylinderweiser Basis; ein Motordrehzahlerfassungsmittel (13) zum Erfassen der Drehzahl (NE) des Verbrennungsmotors als Motordrehzahl (NE); und ein Klopfintensitätsparameterberechnungsmittel (24) zum Berechnen des Klopfintensitätsparameters (SNA_S) basierend auf einem gefilterten Wert, der durch Anwenden einer vorbestimmten Bandpassfilterung (in 21) auf den Zylinderinnendruckparameter (PCS) hergeleitet wird, und Setzen eines Durchlassbands der vorbestimmten Bandpassfilterung gemäß der erfassten Motordrehzahl (NE);

ein Korrekturgradparameterberechnungsmittel (43) zum Berechnen eines Korrekturgradparameters (KIGKN), der einen Grad indiziert, um den der Zündzeitpunkt zur späten Seite hin korrigiert werden sollte, gemäß dem erfassten Klopfintensitätsparameter (SNA_S) auf zylinderweiser Basis; und

ein erstes Korrekturmittel (2) zum Korrigieren des Zündzeitpunkts zur späten Seite hin auf zylinderweiser Basis gemäß dem berechneten Korrekturgradparameter (KIGKN),

worin das Korrekturgradparameterberechnungsmittel (43) den Korrekturgradparameter (KIGKN) nur für einen Zylinder auf zylinderweiser Basis entsprechend einem der Klopfintensitätsparameter (SNA_S) berechnet, wenn der eine Klopfintensitätsparameter (SNA_S) größer als ein erster Bestimmungswert (SNA_REFL) und kleiner als ein zweiter Bestimmungswert (SNA_REFH), der größer als der erste Bestimmungswert (SNA_REFL) ist, ist, und den Korrekturgradparameter (KIGKN) gemeinsam für alle Zylinder berechnet, wenn der eine Klopfintensitätsparameter (SNA_S) gleich oder größer als der zweite Bestimmungswert (SNA_REFH) ist,

worin der erste Bestimmungswert (SNA_REFL) durch Suchen eines Kennfeldwerts gemäß der Motordrehzahl (NE) und dem Ansaugrohrinnendruck (PBA) berechnet wird und der berechnete Kennfeldwert mit einem Korrekturkoeffizienten korrigiert wird, der gemäß der Motorwassertemperatur (TW) berechnet wird, und

der zweite Bestimmungswert (SNA_REFH) durch Addieren eines positiven vorbestimmten Werts zu dem ersten Bestimmungswert (SNA_REFL) berechnet wird,

ferner umfassend:

ein Maximaldruckwinkel-Erfassungsmittel (28) zum Erfassen einer Kurbelwinkelstellung (ΘPMAX), bei der der Zylinderinnendruck (PCYL) einen Maximalwert in dem Verbrennungszyklus darstellt, als maximalen Druckwinkel, auf zylinderweiser Basis basierend auf dem Zylinderinnendruckparameter (VCPS);

ein Sollwinkelsetzmittel (2) zum Setzen eines Sollwinkels, auf den der maximale Druckwinkel abgezielt wird, auf zylinderweiser Basis, und

ein zweites Korrekturmittel zum Korrigieren des Zündzeitpunkts auf zylinderweiser Basis unter Verwendung eines vorbestimmten Rückkopplungsregelalgorithmus, sodass der maximale Druckwinkel (ΘPMAX) den Sollwinkel erreicht;

worin das Korrekturgradparameterberechnungsmittel (43) den Korrekturgradparameter (KIGKN) für den einen Zylinder entsprechend dem einen Klopfintensitätsparameter (SNA_S) auf einen größeren Wert des Grads, um den der Zündzeitpunkt zur späten Seite hin korrigiert wird, berechnet, wenn der eine Klopfintensitätsparameter (SNA_S) größer als der erste Bestimmungswert (SNA_REFL) ist, als dann, wenn der eine Klopfintensitätsparameter (SNA_S) gleich oder kleiner als der erste Bestimmungswert (SNA_REFL) ist, und

das Sollwinkelsetzmittel (2) den Sollwinkel für den einen Zylinder zu einer noch späteren Seite setzt, wenn der eine Klopfintensitätsparameter (SNA_S) größer als der erste Bestimmungswert (SNA_REFL) ist, als dann, wenn der eine Klopfintensitätsparameter gleich oder kleiner als der erste Bestimmungswert (SNA_REFL) ist.

2. Zündzeitpunktsteuervorrichtung für einen Verbrennungsmotor nach Anspruch 1, worin das Klopfintensitätsparameterberechnungsmittel (24) das Durchlassband der vorbestimmten Bandpassfilterung (in 21) auf ein vorbestimmtes erstes Frequenzband setzt, wenn die Motordrehzahl (NE) niedriger als eine vorbestimmte Drehzahl ist, und auf ein vorbestimmtes zweites Frequenzband, das höher als das vorbestimmte erste Frequenzband ist, wenn die Motordrehzahl (NE) gleich oder höher als die vorbestimmte Drehzahl ist.

3. Zündzeitpunktsteuervorrichtung für einen Verbrennungsmotor nach Anspruch 1 oder 2, worin das Klopfintensitätsparameterberechnungsmittel (24) umfasst:

ein erstes Parameterberechnungsmittel (22) zum Berechnen des gefilterten Werts durch Anwenden der vorbestimmten Bandpassfilterung auf den Zylinderinnendruckparameter (VCPS), der während eines Verdichtungstakts in einem vorbestimmten Kurbelwinkelabschnitt erfasst wird, und Berechnen eines ersten Parameters (ANOISES) zur Verwendung bei der Berechnung des Klopfintensitätsparameters (SNA_S) basierend auf dem gefilterten Wert;

ein zweites Parameterberechnungsmittel (23) zum Berechnen des gefilterten Werts durch Anwenden der vorbestimmten Bandpassfilterung auf den Zylinderinnendruckparameter (VCPS), der während eines Arbeitstaks in einem vorbestimmten Kurbelwinkelabschnitt erfasst wird, und Berechnen eines zweiten Parameters (AKNOCKS) zur Verwendung bei der Berechnung des Klopfintensitätsparameters (SNA_S) basierend auf dem gefilterten Wert; und

ein Parameterberechnungsmittel zum Berechnen des Klopfintensitätsparameters (SNA_S) gemäß dem berechneten ersten Parameter (ANOISES) und dem berechneten zweiten Parameter (AKNOCKS),

worin das erste Parameterberechnungsmittel (22) einen Betrieb der vorbestimmten Bandpassfilterung zu einer früheren Zeit startet als der Start der Berechnung des ersten Parameters (ANOISES), und

das zweite Parameterberechnungsmittel (23) den Betrieb der vorbestimmten Bandpassfilterung zu einer früheren Zeit startet als der Start der Berechnung des zweiten Parameters (AKNOCKS).

4. Zündzeitpunktsteuerverfahren für einen Verbrennungsmotor (3), welches die Schritte umfasst:

Bestimmen von Zündzeitpunkten (IGLOGCL#i) für eine Mehrzahl von Zylindern in dem Verbrennungsmotor auf zylinderweiser Basis;

Erfassen eines die Intensität von Klopfen indizierenden Klopfintensitätsparameters (SNA_S) auf zylinderweiser Basis;

worin der Schritt der Erfassung eines Klopfintensitätsparameters umfasst:

Erfassen eines einen Zylinderinnendruck indizierenden Zylinderinnendruckparameters (VCPS) auf zylinderweiser Basis; Erfassen der Drehzahl des Verbrennungsmotors als Motordrehzahl (NE); und Berechnen des Klopfintensitätsparameters (SNA_S) basierend auf einem gefilterten Wert, der durch Anwenden einer vorbestimmten Bandpassfilterung auf den Zylinderinnendruckparameter (VCPS) hergeleitet wird, und Setzen eines Durchlassbands der vorbestimmten Bandpassfilterung gemäß der erfassten Motordrehzahl (NE); Berechnen eines Korrekturgradparameters (KIGKN), der einen Grad indiziert, um den der Zündzeitpunkt zur späten Seite hin korrigiert werden sollte, gemäß dem erfassten Klopfintensitätsparameter (SNA_S) auf zylinderweiser Basis; und

Korrigieren des Zündzeitpunkts zur späten Seite hin auf zylinderweiser Basis gemäß dem berechneten Korrekturgradparameter (KIGKN),

worin der Schritt der Berechnung des Korrekturgradparameters enthält,

den Korrekturgradparameter (KIGKN) nur für einen Zylinder auf zylinderweiser Basis entsprechend einem der Klopfintensitätsparameter (SNA_S) zu berechnen, wenn der eine Klopfintensitätsparameter (SNA_S) größer als ein erster Bestimmungswert (SNA_REFL) und kleiner als ein zweiter Bestimmungswert (SNA_REFH), der größer als der erste Bestimmungswert (SNA_REFL) ist, ist, und den Korrekturgradparameter (KIGKN) gemeinsam für alle Zylinder zu berechnen, wenn der eine Klopfintensitätsparameter (SNA_S) gleich oder größer als der zweite Bestimmungswert (SNA_REFH) ist,

worin der erste Bestimmungswert (SNA_REFL) durch Suchen eines Kennfeldwerts gemäß der Motordrehzahl (NE) und dem Ansaugrohrinnendruck (PBA) berechnet wird und der berechnete Kennfeldwert mit einem Korrekturkoeffizienten korrigiert wird, der gemäß der Motorwassertemperatur (TW) berechnet wird, und

der zweite Bestimmungswert (SNA_REFH) durch Addieren eines positiven vorbestimmten Werts zu dem ersten Bestimmungswert (SNA_REFL) berechnet wird,

ferner die Schritte umfassend:

Erfassen einer Kurbelwinkeistellung (ΘPMAX), bei der der Zylinderinnendruck (PCYL) einen Maximalwert in dem Verbrennungszyklus darstellt, als maximalen Druckwinkel, auf zylinderweiser Basis basierend auf dem Zylinderinnendruckparameter (VCPS#i);

Setzen eines Sollwinkels, auf den der maximale Druckwinkel abgezielt wird, auf zylinderweiser Basis, und

Korrigieren des Zündzeitpunkts auf zylinderweiser Basis unter Verwendung eines vorbestimmten Rückkopplungsregelalgorithmus, sodass der maximale Druckwinkel (ΘPMAX) den Sollwinkel erreicht;

worin der Schritt der Berechnung eines Korrekturgradparameters enthält, den Korrekturgradparameter (KIGKN) für den einen Zylinder entsprechend dem einen Klopfintensitätsparameter (SNA_S) auf einen größeren Wert des Grads, um den der Zündzeitpunkt zur späten Seite hin korrigiert wird,

zu berechnen, wenn der eine Klopfintensitätsparameter (SNA_S) größer als der erste Bestimmungswert (SNA_REFL) ist, als dann, wenn der eine Klopfintensitätsparameter (SNA_S) gleich oder kleiner als der erste Bestimmungswert (SNA_REFL) ist, und

der Schritt des Setzens eines Sollwinkels enthält, den Sollwinkel für den einen Zylinder zu einer noch späteren Seite zu setzen, wenn der eine Klopfintensitätsparameter (SNA_S) größer als der erste Bestimmungswert (SNA_REFL) ist, als dann, wenn der eine Klopfintensitätsparameter gleich oder kleiner als der erste Bestimmungswert (SNA_REFL) ist.

**5.** Zündzeitpunktsteuerverfahren für einen Verbrennungsmotor nach Anspruch 4, worin der Schritt der Berechnung eines Klopfintensitätsparameters enthält: Setzen des Durchlassbands der vorbestimmten Bandpassfilterung auf ein vorbestimmtes erstes Frequenzband, wenn die Motordrehzahl (NE) niedriger als eine vorbestimmte Drehzahl ist, und auf ein vorbestimmtes zweites Frequenzband, das höher als das vorbestimmte erste Frequenzband ist, wenn die Motordrehzahl (NE) gleich oder höher als die vorbestimmte Drehzahl ist.

**6.** Zündzeitpunktsteuerverfahren für einen Verbrennungsmotor nach Anspruch 7 oder 8, worin der Schritt der Berechnung eines Klopfintensitätsparameters (SNA_S) enthält:

Berechnen des gefilterten Werts durch Anwenden der vorbestimmten Bandpassfilterung auf den Zylinderinnendruckparameter (VCPS), der während eines Verdichtungstakts in einem vorbestimmten Kurbelwinkelabschnitt erfasst wird, und Berechnen eines ersten Parameters (ANOISES) zur Verwendung bei der Berechnung des Klopfintensitätsparameters (SNA_S) basierend auf dem gefilterten Wert;

Berechnen des gefilterten Werts durch Anwenden der vorbestimmten Bandpassfilterung auf den Zylinderinnendruckparameter (VCPS), der während eines Arbeitstaks in einem vorbestimmten Kurbelwinkelabschnitt erfasst wird, und Berechnen eines zweiten Parameters (AKNOCKS) zur Verwendung bei der Berechnung des Klopfintensitätsparameters (SNA_S) basierend auf dem gefilterten Wert; und

Berechnen des Klopfintensitätsparameters (SNA_S) gemäß dem berechneten ersten Parameter (ANOISES) und dem berechneten zweiten Parameter (AKNOCKS),

worin der Schritt der Berechnung eines ersten Parameters enthält, einen Betrieb der vorbestimmten Bandpassfilterung zu einer früheren Zeit zu starten als der Start der Berechnung des ersten Parameters (ANOISES), und

der Schritt der Berechnung eines zweiten Parameters (AKNOCKS) enthält, den Betrieb der vorbestimmten Bandpassfilterung zu einer früheren Zeit zu starten als der Start der Berechnung des zweiten Parameters (AKNOCKS).

**Revendications**

**1.** Appareil de commande de calage d'allumage pour un moteur à combustion interne (3), comprenant :

un moyen de détermination de calage d'allumage (40) pour déterminer des calages d'allumage (IGLOGCL#i) pour une pluralité de cylindres dudit moteur à combustion interne sur une base cylindre par cylindre ;

un moyen de détection de paramètre d'intensité de cognement (10, 20) pour détecter un paramètre d'intensité de cognement (SNA_S) indicatif de l'intensité d'un cognement sur une base cylindre par cylindre ;

où ledit moyen de détection de paramètre d'intensité de cognement (10, 20) comprend : un moyen de détection de paramètre de pression interne de cylindre pour détecter un paramètre de pression interne de cylindre (VCPS) indicatif d'une pression interne de cylindre (PCYL) sur une base cylindre par cylindre ; un moyen de détection de vitesse de rotation de moteur (13) pour détecter la vitesse de rotation (NE) dudit moteur à combustion interne en tant que vitesse de rotation de moteur (NE) ; et un moyen de calcul de paramètre d'intensité de cognement (24) pour calculer le paramètre d'intensité de cognement (SNA_S) en se basant sur une valeur filtrée tirée de l'application d'un filtrage passe-bande prédéterminé (en 21) au paramètre de pression interne (PCS), et établir une bande passante du filtrage passe-bande prédéterminé en conformité avec la vitesse de rotation de moteur (NE) détectée ;

un moyen de calcul de paramètre de degré de correction (43) pour calculer un paramètre de degré de correction (KIGKN) indicatif d'un degré auquel le calage d'allumage doit être corrigé vers un côté retardement en conformité avec le paramètre d'intensité de cognement (SNA_S) détecté sur une base cylindre par cylindre ; et

un premier moyen de correction (2) pour corriger le calage d'allumage vers le côté retardement sur une base cylindre par cylindre en conformité avec le paramètre de degré de correction (KIGKN) calculé,

où ledit moyen de calcul de paramètre de degré de correction (43) calcule le paramètre de degré de correction (KIGKN) uniquement pour un cylindre sur une base cylindre par cylindre correspondant à l'un des paramètres d'intensité de cognement (SNA_S) lorsque ce paramètre d'intensité de cognement (SNA_S) est plus grand qu'une première valeur de détermination (SNA_REFL) et plus petit qu'une seconde valeur de détermination (SNA_REFH) plus grande que la première valeur de détermination (SNA_REFL), et

calcule le paramètre de degré de correction (KIGKN) collectivement pour tous les cylindres lorsque ce paramètre d'intensité de cognement (SNA_S) est supérieur ou égal à la seconde valeur de détermination (SNA_REFH), où la première valeur de détermination (SNA_REFL) est calculée en cherchant une valeur de carte en conformité avec la vitesse de rotation de moteur (NE) et la pression interne de tuyau d'admission (PBA) et en corrigeant la valeur de carte calculée avec un coefficient de correction calculé en conformité avec la température d'eau de moteur (TW), et

la seconde valeur de détermination (SNA_REFH) est calculée en ajoutant une valeur prédéterminée positive à la première valeur de détermination (SNA_REFL),

comprenant en outre :

un moyen de détection d'angle de pression maximal (28) pour détecter une position d'angle de vilebrequin (θPMAX) à laquelle la pression interne de cylindre (PCYL) présente une valeur maximale dans le cycle de combustion en tant qu'angle de pression maximal sur un une base cylindre par cylindre en se basant sur le paramètre de pression interne de cylindre (VCPS) ;

un moyen d'établissement d'angle cible (2) pour établir un angle cible ciblé par l'angle de pression maximal sur une base cylindre par cylindre ; et

un second moyen de correction pour corriger le calage d'allumage sur une base cylindre par cylindre à l'aide d'un algorithme de commande à rétroaction prédéterminé de telle sorte que l'angle de pression maximal (θPMAX) atteint l'angle cible,

où ledit moyen de calcul de paramètre de degré de correction (43) calcule le paramètre de degré de correction (KIGKN) pour le cylindre correspondant au paramètre d'intensité de cognement (SNA_S) pour qu'il soit d'une valeur plus grande du degré auquel le calage d'allumage est corrigé vers le côté retardement lorsque le paramètre d'intensité de cognement (SNA_S) est plus grand que la première valeur de détermination (SNA_REFL) que lorsque le paramètre d'intensité de cognement (SNA_S) est inférieur ou égal à la première valeur de détermination (SNA_REFL), et

ledit moyen d'établissement d'angle cible (2) établit l'angle cible pour le cylindre à un côté plus retardateur lorsque le paramètre d'intensité de cognement (SNA_S) est plus grand que la première valeur de détermination (SNA_REFL) que lorsque le paramètre d'intensité de cognement (SNA_S) est inférieur ou égal à la première valeur de détermination (SNA_REFL).

2. Appareil de commande de calage d'allumage pour un moteur à combustion interne selon la revendication 1, dans lequel ledit moyen de calcul de paramètre d'intensité de cognement (24) établit la bande passante dudit filtrage passe-bande prédéterminé (en 21) à une première bande de fréquence prédéterminée lorsque la vitesse de rotation de moteur (NE) est inférieure à une vitesse de rotation prédéterminée, et à une seconde bande de fréquence prédéterminée supérieure à la première bande de fréquence prédéterminée lorsque la vitesse de rotation de moteur (NE) est supérieure ou égale à la vitesse de rotation prédéterminée.

3. Appareil de commande de calage d'allumage pour un moteur à combustion interne selon la revendication 1 ou 2, dans lequel le moyen de calcul de paramètre d'intensité de cognement (24) comprend :

un premier moyen de calcul de paramètre (22) pour calculer la valeur filtrée en appliquant le filtrage passe-bande prédéterminé au paramètre de pression interne de cylindre (VCPS) détecté dans une section d'angle de vilebrequin prédéterminé pendant une course de compression, et calculer un premier paramètre (ANOISES) à utiliser dans le calcul du paramètre d'intensité de cognement (SNA_S) en se basant sur la valeur filtrée ;

un second moyen de calcul de paramètre (23) pour calculer la valeur filtrée en appliquant le filtrage passe-bande prédéterminé au paramètre de pression interne de cylindre (VCPS) détecté dans une section d'angle de vilebrequin prédéterminé pendant une course de détente, et calculer un second paramètre (AKNOCKS) à utiliser dans le calcul du paramètre d'intensité de cognement (SNA_S) en se basant sur la valeur filtrée ; et

un moyen de calcul de paramètre pour calculer le paramètre d'intensité de cognement (SNA_S) en conformité avec le premier paramètre (ANOISES) calculé et le second paramètre (AKNOCKS) calculé,

où ledit premier moyen de calcul de paramètre (22) démarre une opération du filtrage passe-bande prédéterminé à un moment antérieur au début du calcul du premier paramètre (ANOISES), et

ledit second moyen de calcul de paramètre (23) démarre l'opération du filtrage passe-bande prédéterminé à un moment antérieur au début du calcul du second paramètre (AKNOCKS).

4. Procédé de commande de calage d'allumage pour un moteur à combustion interne (3), comprenant les étapes consistant à :

déterminer des calages d'allumage (IGLOGCL#i) pour une pluralité de cylindres dudit moteur à combustion interne sur une base cylindre par cylindre ;

détecter un paramètre d'intensité de cognement (SNA_S) indicatif de l'intensité d'un cognement sur une base cylindre par cylindre ;

où ladite étape de détection d'un paramètre d'intensité de cognement inclut : la détection d'un paramètre de pression interne de cylindre (VCPS) indicatif d'une pression interne de cylindre sur une base cylindre par cylindre ; la détection de la vitesse de rotation dudit moteur à combustion interne en tant que vitesse de rotation de moteur (NE) ; et

le calcul du paramètre d'intensité de cognement (SNA_S) en se basant sur une valeur filtrée tirée de l'application d'un filtrage passe-bande prédéterminé au paramètre de pression interne de cylindre (VCPS), et l'établissement d'une bande passante du filtrage passe-bande prédéterminé en conformité avec la vitesse de rotation de moteur (NE) détectée ;

calculer un paramètre de degré de correction (KIGKN) indicatif d'un degré auquel le calage d'allumage doit être corrigé vers un côté retardement en conformité avec le paramètre d'intensité de cognement (SNA_S) détecté sur une base cylindre par cylindre ; et corriger le calage d'allumage vers le côté retardement sur une base cylindre par cylindre en conformité avec le paramètre de degré de correction (KIGKN) calculé,

où ladite étape de correction d'un paramètre de degré de correction inclut le calcul du paramètre de degré de correction (KIGKN) uniquement pour un cylindre sur une base cylindre par cylindre correspondant à l'un des paramètres d'intensité de cognement (SNA_S) lorsque ce paramètre d'intensité de cognement (SNA_S) est plus grand qu'une première valeur de détermination (SNA_REFL) et est plus petit qu'une seconde valeur de détermination (SNA_REFH) plus grande que la première valeur de détermination (SNA_REFL), et le calcul du paramètre de degré de correction (KIGKN) collectivement pour tous les cylindres lorsque ce paramètre d'intensité de cognement (SNA_S) est supérieur ou égal à la seconde valeur de détermination (SNA_REFH),

où la première valeur de détermination (SNA_REFL) est calculée en cherchant une valeur de carte en conformité avec la vitesse de rotation de moteur (NE) et la pression interne de tuyau d'admission (PBA) et en corrigeant la valeur de carte calculée avec un coefficient de correction calculé en conformité avec la température d'eau de moteur (TW), et

la seconde valeur de détermination (SNA_REFH) est calculée en ajoutant une valeur prédéterminée positive à la première valeur de détermination (SNA_REFL) ;

comprenant en outre les étapes consistant à :

détecter une position d'angle de vilebrequin (θPMAX) à laquelle la pression interne de cylindre (PCYL) présente une valeur maximale dans le cycle de combustion en tant qu'angle de pression maximal sur une base cylindre par cylindre en se basant sur le paramètre de pression interne de cylindre (VCPS#i) ;

établir un angle cible ciblé par l'angle de pression maximal sur une base cylindre par cylindre ; et

corriger le calage d'allumage sur une base cylindre par cylindre à l'aide d'un algorithme de commande à rétroaction prédéterminé de telle sorte que l'angle de pression maximal (θPMAX) atteint l'angle cible,

où ladite étape de calcul d'un paramètre de degré de correction (KIGKN) inclut le calcul du paramètre de degré de correction pour le cylindre correspondant au paramètre d'intensité de cognement (SNA_S) pour qu'il soit d'une valeur supérieure du degré auquel le calage d'allumage est corrigé vers le côté retardement lorsque ce paramètre d'intensité de cognement (SNA_S) est plus grand que la première valeur de détermination (SNA_REFL) que lorsque le paramètre d'intensité de cognement est inférieur ou égal à la première valeur de détermination (SNA_REFL), et

ladite étape d'établissement d'un angle cible inclut l'établissement d'un angle cible pour ce cylindre vers un côté plus retardateur lorsque ce paramètre d'intensité de cognement (SNA_S) est plus grand que la première valeur de détermination (SNA_REFL) que lorsque ce paramètre d'intensité de cognement est inférieur ou égal à la première valeur de détermination (SNA_REFL).

5. Procédé de commande de calage d'allumage pour un moteur à combustion interne selon la revendication 4, dans lequel ladite étape de calcul d'un paramètre d'intensité de cognement inclut l'établissement de la bande passante dudit filtrage passe-bande prédéterminé à une première bande de fréquence prédéterminée lorsque la vitesse de rotation de moteur (NE) est inférieure à une vitesse de rotation prédéterminée, et à une seconde bande de fréquence prédéterminée supérieure à la première bande de fréquence prédéterminée lorsque la vitesse de rotation de moteur (NE) est supérieure ou égale à la vitesse de rotation prédéterminée.

6. Procédé de commande de calage d'allumage pour un moteur à combustion interne selon la revendication 7 ou 8, dans lequel ladite étape de calcul d'un paramètre d'intensité de cognement (SNA_S) inclut les étapes consistant à :

calculer la valeur filtrée en appliquant le filtrage passe-bande prédéterminé au paramètre de pression interne de cylindre (VCPS) détecté dans une section d'angle de vilebrequin prédéterminé pendant une course de compression, et calculer un premier paramètre (ANOISES) à utiliser dans le calcul du paramètre d'intensité de cognement (SNA_S) en se basant sur la valeur filtrée ;

calculer la valeur filtrée en appliquant le filtrage passe-bande prédéterminé au paramètre de pression interne de cylindre (VCPS) détecté dans une section d'angle de vilebrequin prédéterminé pendant une course de détente, et calculer un second paramètre (AKNOCKS) à utiliser dans le calcul du paramètre d'intensité de cognement (SNA_S) en se basant sur la valeur filtrée ; et

calculer le paramètre d'intensité de cognement (SNA_S) en conformité avec le premier paramètre (ANOISES) calculé et le second paramètre (AKNOCKS) calculé,

où ladite étape de calcul d'un premier paramètre inclut le démarrage d'une opération du filtrage passe-bande prédéterminé à un moment antérieur au début du calcul du premier paramètre (ANOISES), et

ladite étape de calcul d'un second paramètre (AKNOCKS) inclut le démarrage de l'opération du filtrage passe-bande prédéterminé à un moment antérieur au début du calcul du second paramètre (AKNOCKS).

F I G. 1

EP 1 862 670 B1

F I G. 3

F I G. 4

F I G. 5

EP 1 862 670 B1

F I G. 7

F I G. 8

F I G. 9

```
        ┌─────────────────────┐
        │       START         │
        └──────────┬──────────┘
                   │
                   ▼                S1
        ┌─────────────────────┐
        │     READ VCPS#i      │
        └──────────┬──────────┘
                   │
                   ▼                S2
        ┌─┬───────────────────┬─┐
        │ │ DETERMINE KNOCKING IN #i │ │
        └─┴───────────────────┴─┘
                   │
                   ▼                S3
        ┌─┬───────────────────┬─┐
        │ │  CALCULATE  PCYLF#i │ │
        └─┴───────────────────┴─┘
                   │
                   ▼                S4
        ┌─┬───────────────────┬─┐
        │ │ CALCULATE  θ PMAX#i │ │
        └─┴───────────────────┴─┘
                   │
                   ▼
        ┌─────────────────────┐
        │        END          │
        └─────────────────────┘
```

F I G. 1 0

```
        ┌─────────────────────┐
        │  DETERMINATION OF   │
        │  KNOCKING IN #4     │
        └─────────────────────┘
                   │
                   ▼            ╱S10
   NO  ╱─────────────────────╲
  ◄────┤   CA = CA#4    ?     │
       ╲─────────────────────╱
                   │ YES
                   ▼            ╱S11
       ┌─────────────────────┐
       │    F_DONE#4 ← 0      │
       └─────────────────────┘
                   │
                   ▼            ╱S12
  YES  ╱─────────────────────╲
  ◄────┤   F_DONE#4 = 1   ?   │
       ╲─────────────────────╱
                   │ NO
                   ▼            ╱S13
       ┌─────────────────────┐
       │  CALCULATE SNA_S#4  │
       └─────────────────────┘
                   │
                   ▼            ╱S14
       ┌─────────────────────┐
       │  CALCULATE SNA_REFL │
       └─────────────────────┘
                   │
                   ▼            ╱S15
       ╱─────────────────────╲   NO
       │ SNA_S#4 > SNA_REFL ? ├──────┐
       ╲─────────────────────╱      │
                   │ YES            │
                   ▼     ╱S16       ▼   ╱S17
       ┌──────────────────┐  ┌──────────────────┐
       │ F_KNOCKIG#4 ← 1  │  │ F_KNOCKIG#4 ← 0  │
       └──────────────────┘  └──────────────────┘
                   │                │
                   ◄────────────────┘
                   ▼            ╱S18
       ┌─────────────────────┐
       │    F_DONE#4 ← 1     │
       └─────────────────────┘
                   │
                   ▼
        ┌─────────────────────┐
        │       RETURN        │
        └─────────────────────┘
```

F I G. 1 1

```
                    ┌─────────────────────────┐
                    │  CALCULATION OF SNA_S#4  │
                    └─────────────────────────┘
                                 │
                                 ▼          S30
                    ┌─────────────────────────┐
                    │    SET FOUR SECTIONS     │
                    └─────────────────────────┘
                                 │          S31
                                 ▼                    YES
                    ╱  F_SNA_S#4 = 1  ? ╲ ──────────────────┐
                    ╲                   ╱                    │
                         │ NO                               │
                         ▼          S32                     │
              YES  ╱  NOISE BPF SECTION ? ╲                 │
         ┌────────╱                        ╲                │
         │             │ NO      S38                        │
         │             ▼                          NO        │
         │   ╱  KNOCK BPF SECTION ? ╲ ─────────────────────►│
         │   ╲                       ╱                       │
         │          │ YES                                    │
         │   S33    ▼          S39                           │
    ┌───────────────────┐  ┌───────────────────┐            │
    │ CALCULATE VCPS_F#4 │  │ CALCULATE VCPS_F#4 │           │
    └───────────────────┘  └───────────────────┘            │
         │                       │          S40             │
    NO   ▼          S34          ▼                   NO     │
  ╱ NOISE LEVEL        ╲    ╱ KNOCK LEVEL        ╲ ─────────►│
 ◄╲ CALCULATION SECTION?╱   ╲ CALCULATION SECTION?╱          │
         │ YES   S35          │ YES    S41                   │
         ▼                    ▼                              │
  ┌──────────────────┐  ┌──────────────────┐                │
  │ CALCULATE ANOISES#4│  │ CALCULATE AKNOCKS#4│             │
  └──────────────────┘  └──────────────────┘                │
         │          S36        │          S42               │
  NO     ▼                     ▼                    NO      │
 ◄╱ END POINT OF      ╲   ╱ END POINT OF      ╲ ───────────►│
  ╲ CALCULATION SECTION?╱  ╲ CALCULATION SECTION?╱          │
         │ YES   S37         │ YES    S43                    │
         ▼                   ▼                               │
  ┌──────────────────┐  ┌──────────────────┐                │
  │ CALCULATE NLVLS_A#4│  │ CALCULATE KNLVLS_A#4│            │
  └──────────────────┘  └──────────────────┘                │
         │                   │          S44                 │
         │                   ▼                               │
         │            ┌──────────────────┐                  │
         │            │ CALCULATE SNA_S#4 │                 │
         │            └──────────────────┘                  │
         │                   │          S45                 │
         │                   ▼                               │
         │            ┌──────────────────┐                  │
         │            │  F_SNA_S#4 ← 1    │                 │
         │            └──────────────────┘                  │
         │                   │                               │
         └────────────┐      │      ┌──────────────────────┘
                      ▼      ▼      ▼
                    ┌─────────────────┐
                    │     RETURN       │
                    └─────────────────┘
```

# FIG. 12

CALCULATION OF VCPS_F#4

S50

NE ≧ NE1 ?
YES
NO

S51

b1 ← b1L
.
.
.
bm ← bmL

S52

b1 ← b1H
.
.
.
bm ← bmH

S53

CALCULATE VCPS_F#4

RETURN

FIG. 13

F I G. 1 4

```
           ┌─────────────────────────────────┐
           │ IGNITION TIMING CONTROL FOR #4  │
           └─────────────────────────────────┘
                          │
                          ▼              S80
           ┌─────────────────────────────────┐
           │     READ VARIETY OF DATA        │
           └─────────────────────────────────┘
                          │
                          ▼              S81
           ┌─────────────────────────────────┐
           │       CALCULATE  PMCMD          │
           └─────────────────────────────────┘
                          │
                          ▼              S82
           ┌─────────────────────────────────┐
           │       CALCULATE  IGMAP          │
           └─────────────────────────────────┘
                          │
                          ▼              S83
           ┌─────────────────────────────────┐
           │      CALCULATE  IGCRT#4         │
           └─────────────────────────────────┘
                          │
                          ▼              S84
           ┌─────────────────────────────────┐
           │      CALCULATE  IGCRK#4         │
           └─────────────────────────────────┘
                          │
                          ▼                        S85
    ┌────────────────────────────────────────────────┐
    │  IGLOG#4 ← IGMAP + IGCRT#4 + IGCRK#4            │
    └────────────────────────────────────────────────┘
                          │
                          ▼              S86
           ┌─────────────────────────────────┐
           │      CALCULATE  IGSLD#4         │
           └─────────────────────────────────┘
                          │
                          ▼                        S87
    ┌────────────────────────────────────────────────┐
    │  IGLOGCL#4 ← IGLOG#4 + IGSLD#4                  │
    └────────────────────────────────────────────────┘
                          │
             YES          ▼              S88
       ┌────────< IGLOGCL#4 < IGLOG_L ? >
       │                  │ NO                      S90
       │                  ▼                              YES
       │         < IGLOGCL#4 > IGLOG_H ? >──────────┐
       │     S89          │ NO                      │   S91
       ▼                  │            ┌─────────────────────────────┐
┌──────────────────┐     │            │  IGLOGCL#4 ← IGLOG_H         │
│ IGLOGCL#4 ← IGLOG_L │   │            └─────────────────────────────┘
└──────────────────┘     │                         │
       │                 │                         │
       └─────────────────┼─────────────────────────┘
                         ▼
                  ┌─────────────┐
                  │   RETURN    │
                  └─────────────┘
```

F I G. 1 5

```
                    CALCULATION OF IGCRK#4
                              │
                              │                    S100
                    NO        ▼
        ┌─────────────── F_KNOCKIG#4=1 ?
        │                     │
        │         S109       YES
        ▼                     │              S101
   CT2←CTZ2+1      YES        ▼
        │       ┌──── SNA_S#4≧SNA_REFH ?
        │       │             │
        │       │            NO
        ▼       │             ▼              S102
   NO   S110    │    OTHER THAN FOURTH
 ┌─ CT2>CT2REF ? │   CYLINDER DURING THIS  ─── NO ──┐
 │      │        │   COMBUSTION CYCLE              │
 │     YES       │   F_KNOCKIG#i=1                 │
 │      │        │             │                   ▼      S107
 │      ▼  S111  │            YES      YES
 │  F_KOUSIN←0   │             │  ◄────────── F_KOUSIN=1 ?
 │      │        │             │                   │
 │      │        │             │                  NO
 └──────┤        │             │                   │
        ▼  S112  │             ▼  S103             ▼  S108
  GRADUALLY REDUCE│       UPDATE KIGKN#i     UPDATE KIGKN#4
  KIGKN#4         │             │                   │
        │         │             │                   │
        ▼  S113   │             ▼  S104             │
  GRADUALLY INCREASE│       F_KOUSIN←1              │
  IGCRK#4          │             │                   │
        │          │             └──────────────────┤
        │          │                   ▼  S105
        │          │          IGKNOCK#4←DIGKR·KIGKN#4
        │          │                   │
        │          │                   ▼  S106
        │          │          IGCRK#4←DIGRSV-IGKNOCK#4
        │          │                   │
        └──────────┴───────────────────┤
                                        ▼
                                     RETURN
```

F I G. 1 6

UPDATE OF KIGKN#i

KIGKM#i ← KIGKM#iZ+DKIGKM    $\quad$ S120

KIGKN#i ← R·KIGKN#iZ+(1−R)·KIGKM#i    $\quad$ S121

DEFINE UPPER LIMIT TO KIGKN#i    $\quad$ S122

RETURN

EP 1 862 670 B1

F I G. 1 7

```
CALCULATION OF IGSLD#4
```
S130
```
CALCULATE θPMAX_CMD_MAP
```
S131
```
CALCULATE DθPMAX#4
```
S132
$$\theta PMAX\_CMD\#4 \leftarrow \theta PMAX\_CMD\_MAP + D\theta PMAX\#4 + IGCRK\#4$$
S133
```
CALCULATE USLIG#4
```
S134
```
DEFINE LIMIT TO USLIG#4
```
```
RETURN
```

# F I G. 1 8

F I G. 1 9

**EP 1 862 670 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 62150056 A
- US 4483295 A
- US 4760828 A
- WO 0214822 A
- DE 3704838 A1